(19) Europäisches Patentamt European Patent Office Office européen des brevets

(11) **EP 3 363 934 B1**

## (12) EUROPEAN PATENT SPECIFICATION

(45) Date of publication and mention of the grant of the patent:
**01.07.2020 Bulletin 2020/27**

(21) Application number: **16855555.5**

(22) Date of filing: **14.10.2016**

(51) Int Cl.:
*D01F 8/06* (2006.01)          *B60C 9/00* (2006.01)
*C08K 7/02* (2006.01)          *C08L 21/00* (2006.01)
*B60C 15/06* (2006.01)

(86) International application number:
**PCT/JP2016/080624**

(87) International publication number:
**WO 2017/065303 (20.04.2017 Gazette 2017/16)**

(54) **FIBER FOR RUBBER REINFORCEMENT, RUBBER-FIBER COMPOSITE, AND PNEUMATIC TIRE USING SAME**

FASER ZUR KAUTSCHUKVERSTÄRKUNG, KAUTSCHUK-HARZ-VERBUNDSTOFF UND LUFTREIFEN DAMIT

FIBRES POUR RENFORCEMENT DE CAOUTCHOUC, CONJUGUÉ CAOUTCHOUC-FIBRES ET PNEUMATIQUE METTANT EN OEUVRE CE CONJUGUÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.10.2015 JP 2015203298**

(43) Date of publication of application:
**22.08.2018 Bulletin 2018/34**

(73) Proprietor: **Bridgestone Corporation**
**Tokyo 104-8340 (JP)**

(72) Inventor: **NAKAMURA Masaaki**
**Tokyo 104-8340 (JP)**

(74) Representative: **Oxley, Robin John George**
**Marks & Clerk LLP**
**15 Fetter Lane**
**London EC4A 1BW (GB)**

(56) References cited:
**EP-A1- 0 586 937          WO-A1-2015/152083**
**WO-A1-2015/156405          JP-A- H 042 815**
**JP-A- H0 859 846          JP-A- H03 279 417**
**JP-A- H11 222 775          JP-A- H11 342 704**
**JP-A- S57 167 417          JP-A- 2002 052 902**
**US-A- 4 211 819          US-A- 5 773 144**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a rubber-fiber composite, and a pneumatic tire using the same (hereinafter, also simply referred to as "tire").

BACKGROUND ART

Conventionally, as reinforcing materials of rubber articles, a variety of materials such as organic fibers and metal materials have been examined and used. Particularly, as reinforcing materials used for reinforcement of rubber articles such as pneumatic tires that are subjected to strain input, cord materials whose adhesion with a rubber is improved by coating with an adhesive composition have been used conventionally.

Further, as one type of organic fiber, the use of a so-called "core-sheath fiber", whose cross-sectional structure is constituted by a core portion forming the center and a sheath portion covering the periphery of the core portion, as a reinforcing material has also been examined in various studies. For example, Patent Document 1 discloses a cord-rubber composite obtained by embedding a cord in an unvulcanized rubber and integrating them by vulcanization, which cord is composed of a core-sheath type fiber that contains a resin selected from at least one of polyesters, polyamides, polyvinyl alcohols, polyacrylonitriles, rayons and heterocycle-containing polymers as a core component, and a thermoplastic resin that is thermally fusible with a rubber as a sheath component. Moreover, Patent Document 2 discloses a core-sheath type composite fiber comprising a core portion and a sheath portion, which core portion contains a thermoplastic resin and sheath portion contains a polyolefin resin.

RELATED ART DOCUMENTS

PATENT DOCUMENTS

[Patent Document 1] Japanese Unexamined Patent Application Publication No. H10-6406 (Claims, etc.)
[Patent Document 2] Japanese Unexamined Patent Application Publication No. 2003-193332 (Claims, etc.)

SUMMARY OF THE INVENTION

PROBLEMS TO BE SOLVED BY THE INVENTION

However, when a cord material treated with an adhesive is cut to be embedded into a rubber, the cut end surface of the cord material is not covered with an adhesive composition; therefore, there is a room for further improvement in terms of adhesiveness under an excessive strain applied thereto as a load after adhesion with the rubber. A similar improvement is also desired in a reinforcing material in which such a core-sheath fiber as disclosed in Patent Document 1 is used.

Further, in Example 1 of Patent Document 2, an olefin-based polymer composition obtained by mixing two kinds polymers, which are a high-density polyethylene and a maleic acid-modified high-density polyethylene having an acid value of 27 mg KOH/g as determined by the method of JIS K0070, is applied as a resin of the sheath portion so as to obtain an effect of improving the compatibility of the sheath portion at the interface with nylon 6 resin used in the core portion. In this case, however, since a resin having a quite high acid value is incorporated into the resin material of the sheath portion, the compatibility is reduced due to the difference in polarity between the sheath portion and a rubber to be adhered. At the same time, incorporation of the polymer having a high acid value causes the resin material of the sheath portion to generate a proton $H^+$-donating reducing atmosphere and an action of reducing a polyvulcanized product derived from sulfur contained in a rubber composition into hydrogen sulfide and the like is thereby exerted; therefore, it is believed that the effect of improving the cohesive failure resistance with an adherend rubber, which effect is attributed to sulfur cross-linking by a polyvulcanized product in a rubber, is also deteriorated in the vicinity of the interface with the rubber. In tires and the like of recent years that are gradually reduced in weight from the energy conservation standpoint, since the stability against mechanical inputs is increasingly required, a further improvement from the resin of the sheath portion of Patent Document 2 is demanded in terms of the adhesiveness and the durability of the adhesive strength under traveling.

Patent document US 4 211 819 A discloses heat-melt adhesive fibers comprising a resin consisting of: (a) 50-100% of a crystalline propylene random terpolymer consisting of (1) 84-98% by weight of propylene, (2) 1-15% by weight of butene-1, and (3) 1-10% by weight of ethylene and (b) 0-50% by weight of a substantially non-crystalline ethylene-propylene random copolymer, wherein said resin is the sheath part of a core-sheath fiber wherein the core is made of polypropylene.

In view of the above, an object of the present invention is to provide: a rubber-reinforcing fiber composite, in which adhesion between a rubber and a fiber is enhanced and which is thereby capable of further improving the durability than before when used as a reinforcing material; a rubber-fiber composite; and a pneumatic tire using the same.

MEANS FOR SOLVING THE PROBLEMS

The present inventor intensively studied to discover that the above-described problems can be solved by using a core-sheath type composite fiber whose core portion is constituted by a high-melting-point resin having a melting point of 150°C or higher and sheath portion is constituted by a low-melting-point resin material containing an olefin-based polymer, thereby completing the present invention.

More in particular the present invention discloses a rubber-fiber composite obtained by coating a reinforcing material composed of a rubber-reinforcing fiber with a rubber, wherein the rubber-reinforcing fiber comprises a core-sheath type composite fiber whose core portion is composed of a high-melting-point resin (A) having a melting point of 150°C or higher and sheath portion is composed of a resin material (B) having a melting point lower than that of the high-melting point resin (A), wherein the resin material (B) comprises an olefin-based copolymer composition (X) which comprises a propylene-$\alpha$-olefin copolymer (C1), and at least one polymer selected from a propylene-nonconjugated diene copolymer (C2), an ionomer (C3) whose degree of neutralization with a metal salt of an olefin-based copolymer containing a monomer of an unsaturated carboxylic acid or anhydride thereof is 20% or higher, wherein said ionomer (C3) is an ionomer of an ethylene-ethylenically unsaturated carboxylic acid copolymer, or an ionomer of an unsaturated carboxylic acid polymer of a polyolefin, and wherein the content of said ionomer (C3) is 2 to 40 parts by mass taking the amount of the olefin-based composition (X) as 100 parts by mass, and an olefin-based homopolymer or olefin-based copolymer (D) selected from an $\alpha$-olefin and a polyolefin rubber, excluding (C1) and (C2).

In the present invention, it is preferred that the resin material (B) comprise: the olefin-based copolymer composition (X); and at least one selected from the group consisting of a styrene-based elastomer (E) containing a monomolecular chain in which mainly styrene monomers are arranged in series, a vulcanization accelerator (F) selected from Lewis base compound (F1) and sulfenamide-based accelerators, guanidine-based accelerators, thiazole-based accelerators, thiuram-based accelerators and dithiocarbamic acid-based accelerators (F2) and a filler (N).

In the present invention, it is also preferred that the propylene-$\alpha$-olefin copolymer (C1) be a random copolymer of propylene and ethylene 1-butene. Further, it is preferred that the propylene-nonconjugated diene copolymer (C2) be an ethylene-propylene-diene copolymer.

Still further, in the present invention, it is preferred that the rubber-reinforcing fiber comprise, in 100 parts by mass of the olefin-based copolymer composition (X), the propylene-$\alpha$-olefin copolymer (C1) in an amount of 20 to 98 parts by mass, and at least of one the propylene-nonconjugated diene copolymer (C2) in an amount of 2 to 80 parts by mass, the ionomer (C3) in an amount of 2 to 40 parts by mass, and the olefin-based homopolymer or olefin-based copolymer (D) (excluding (C1) and (C2)) in an amount of 2 to 75 parts by mass.

The tire of the present invention is characterized by comprising a reinforcing layer composed of the above-described rubber-fiber composite.

EFFECTS OF THE INVENTION

According to the present invention, a rubber-reinforcing fiber which exhibits an improved adhesion with a rubber can be obtained and, by using this rubber-reinforcing fiber, a rubber-fiber composite capable of further improving the durability as compared to conventional rubber-fiber composites when used as a reinforcing material, and a pneumatic tire using the same can be realized.

BRIEF DESCRIPTION OF THE DRAWINGS

FIG. 1 is a widthwise cross-sectional view that illustrates one example of the pneumatic tire of the present invention.
FIG. 2 is an explanatory drawing that illustrates the cut-out state of a sample piece used in Examples.
FIG. 3 is an explanatory drawing that illustrates the cohesiveness evaluation test performed in Examples.

MODE FOR CARRYING OUT THE INVENTION

Embodiments of the present invention will now be described in detail referring to the drawings.

The rubber-reinforcing fiber constituting the rubber-fiber composite of the present invention comprises a core-sheath type composite fiber whose core portion is composed of a high-melting-point resin (A) having a melting point of 150°C or higher and sheath portion is composed of a resin material (B) having a melting point lower than that of the high-melting-point resin (A).

The rubber-reinforcing fiber of the present invention is characterized in that the resin material (B) constituting the sheath portion comprises an olefin-based copolymer composition (X), and this olefin-based copolymer composition (X) comprises a propylene-$\alpha$-olefin copolymer (C1), and at lest one polymer selected from a propylene-nonconjugated diene copolymer (C2), an ionomer (C3) whose degree of neutralization with a metal salt of an olefin-based copolymer containing a monomer of an unsaturated carboxylic acid or anhydride thereof is 20% or higher, wherein said ionomer (C3) is an ionomer of an ethylene-ethylenically unsaturated carboxylic acid copolymer, or an ionomer of an unsaturated carboxylic acid polymer or a polyolefin, and wherein the content of said ionomer (C3) is 2 to 40 parts by mass taking the amount of the olefin-based composition (X) as 100 parts by mass, and an olefin-based homopolymer or olefin-based copolymer (D) selected from an $\alpha$-olefin and a polyolefin rubber, excluding (C1) and (C2). By using such a combination of two or more olefin-based polymers in the sheath portion, a rubber-reinforcing fiber which has superior fusibility with an adherend rubber and more favorable workability in processing and the like than conventional rubber-reinforcing fibers can be obtained.

In the core-sheath type composite fiber constituting the rubber-reinforcing fiber of the present invention, since the resin material (B) constituting the sheath portion has a melting point lower than that of the high-melting-point resin (A) constituting the core portion, there is an advantage that the core-sheath type composite fiber, when applied for reinforcement of a rubber article, can be directly adhered with a rubber through thermal fusion by the heat applied during vulcanization. In the present invention, a phenomenon that a fiber resin which is melted by heating at a temperature of its melting point or higher is tightly adhered with a rubber through interaction at their interface is referred to as "fusion".

That is, the rubber-reinforcing fiber constituting the rubber-fiber composite of the present invention is coated with a rubber to form a rubber-fiber composite and, since integration of this rubber-fiber composite with a rubber does not require a dipping treatment in which an adhesive composition (e.g., a resorcin-formalin-latex (RFL) adhesive) conventionally used for bonding tire cords is applied, the bonding step can be simplified. Further, in the application for reinforcement of a tire or the like, for adhesion of an organic fiber with a rubber using an adhesive composition, it is generally required to coat the organic fiber with a fiber coating rubber (skim rubber) in order to secure an adhesive strength; however, according to the rubber-reinforcing fiber constituting the rubber-fiber composite of the present invention, a high adhesive strength between the rubber-reinforcing fiber and a side rubber, a tread rubber or the like can be directly attained through thermal fusion without requiring a fiber coating rubber. In cases where an organic fiber is coated with a fiber coating rubber, since it is necessary to secure such a coating thickness that prevents breakage of the rubber coating, the rubber weight is increased as much as the amount of the rubber used for securing the coating thickness, which in turn contradicts the demand for reduction in tire weight that generally contributes to improvement of the economic efficiency. However, in the present invention, there is no such restriction in the adhesion process; therefore, a composite with a rubber species appropriate for a part to be reinforced, such as a side tread rubber, can be provided without any secondary negative effect such as an increase in the weight of fiber coating rubber.

In this manner, the above-described core-sheath type composite fiber is capable of exhibiting sufficient reinforcement performance when used as a reinforcing material of a rubber article such as a tire. Accordingly, since the rubber-reinforcing fiber can be fused with a rubber via the sheath portion in the absence of a dipping treatment or a rubber coating process while securing reinforcement performance by the core portion, the use of the rubber-fiber composite of the present invention particularly in the tire reinforcement application can also contribute to a reduction in tire weight through a reduction in gauge thickness.

Further, according to the studies conducted by the present inventor, it was found that, when the rubber-fiber composite of the present invention is vulcanized, at a cut end of the resultant, the cut end surface of the core portion that was exposed prior to the vulcanization is covered by the resin of the sheath portion, and the resin of the sheath portion and a rubber can be strongly fused together in this part as well. The reason for this is believed to be because the low-melting-point olefin-based polymer constituting the sheath portion is made to flow by the heat applied during the vulcanization and infiltrates into gaps between the cut end surface of the core portion constituted by a high-melting-point resin and the rubber. Consequently, the durability of the rubber-fiber composite against strain can be further improved after the vulcanization.

In those organic fibers for rubber article reinforcement which are coated with an adhesive composition such as a resorcin-formalin-latex (RFL) adhesive that is conventionally used for bonding tire cords, since cords are cut in accordance with the dimensions of a member in the process of assembling the member composed of a rubber or a coated cord material, the surface of the end at which the cords are cut is not treated with the adhesive composition. In such a rubber article, input of a high strain that causes detachment of the cord end and the rubber may cause development of a crack from the non-adhered part between the cord end and the rubber, and this could result in breakage of the rubber article. Therefore, in the structural design of commercial rubber articles such as tires, there are restrictions relating to inhibition of crack generation from a cord end in that, for example, no cord end should be arranged in a tire part subjected to high strain, or strain causing detachment of a cord end and a rubber should be reduced by increasing the thickness of the rubber member or the like. On the other hand, in the present invention, since such a cut end surface of a cord fuses with a rubber, there is no restriction associated with crack development from a non-adhered part between the cord end and the rubber due to strain; therefore, it is now possible to provide a composite with a rubber species that allows a design of arranging a cord end in a tire part subjected to high strain, which was previously difficult, and enables to achieve a reduction in tire weight through a reduction in gauge thickness in the vicinity of the cord end as it is no longer necessary to worry about an increase in strain that may cause detachment of the cord end and the rubber.

The rubber-reinforcing fiber constituting the rubber-fiber composite of the present invention is characterized by being a composite fiber having a core-sheath structure in which the sheath portion is constituted by a low-melting-point resin material (B) and can be directly adhered with a rubber through thermal fusion and, at the same time, the core portion is constituted by a high-melting-point resin (A) having a melting point of 150°C or higher. When the composite fiber is, for example, a single-component monofilament cord, the effects of the present invention cannot be attained. In the case of a conventional single-component monofilament cord that is made of a polyolefin resin or the like and has a low melting point, the monofilament cord forms a melt through thermal fusion with the rubber of a rubber article and can thereby be wet-spread and adhered to the adherend rubber; however, once the monofilament cord is melted and the molecular chains of the fiber resin that are oriented in the cord direction become unoriented, the tensile rigidity that is required as a cord material for rubber reinforcement can no longer be maintained. Meanwhile, when the monofilament cord has such a high melting point that does not cause its resin to form a melt even under heating, the melt-fusibility with a rubber is deteriorated. Therefore, in a single-component monofilament cord that is not a composite fiber having the core-sheath structure of the present invention, it is difficult to achieve both conflicting functions of maintaining the tensile rigidity and maintaining the melt-fusibility with a rubber.

In the rubber-reinforcing fiber constituting the rubber-fiber composite of the present invention, the melting point of the high-melting-point resin (A) constituting the core portion is 150°C or higher, preferably 160°C or higher. When the melting point of the high-melting-point resin is lower than 150°C, for example, the core portion of the composite fiber is melt-deformed and reduced in thickness and/or the orientation of the fiber resin molecules is deteriorated during vulcanization of a rubber article, so that sufficient reinforcement performance is not attained.

Further, in the rubber-reinforcing fiber constituting the rubber-fiber composite of the present invention, the lower limit of the melting point of the resin material (B) constituting the sheath portion is in a range of preferably 80°C or higher, more preferably 120°C or higher, still more preferably 135°C or higher. When the melting point of the resin material (B) is lower than 80°C, a sufficient adhesive strength may not be obtained due to, for example, formation of fine voids on the surface that is caused by inadequate adhesion of the rubber to the surface of the resin material (B) through fluidization in the early stage of vulcanization. The melting point of the resin material (B) is preferably 120°C or higher since this enables to simultaneously perform thermal fusion of the rubber and the resin material (B) and a vulcanization cross-linking reaction of the resulting rubber composition at a vulcanization temperature of 130°C or higher that can be used industrially for rubber compositions in which sulfur and a vulcanization accelerator are incorporated. In cases where the vulcanization temperature is set at 170°C or higher in order to industrially shorten the vulcanization time, with the melting point of the resin material (B) being lower than 80°C, since the viscosity of the molten resin is excessively low and the thermal fluidity is thus high during vulcanization, a pressure applied during vulcanization may cause generation of a thin part in the sheath, and a strain stress applied in an adhesion test or the like may be concentrated in such a thin part of the resin material of the sheath portion to make this part more likely to be broken; therefore, the melting point of the resin material (B) is more preferably 120°C or higher. Meanwhile, when the upper limit of the melting point of the resin material (B) is lower than 150°C, because of the thermal fluidity of the resin material (B), compatibility with a rubber composition in the early stage of vulcanization may be attained at a high vulcanization temperature of 175°C or higher. Further, when the melting point of the resin material (B) is 145°C or lower, resin compatibility in the early stage of vulcanization can be attained at a common vulcanization temperature, which is preferred. Moreover, when the resin material (B) contains an elastomer having rubber-like physical properties, the resin material (B) is softened with no clear melting point; however, it is preferred since the rubber-like physical properties correspond to a molten state of a polymer and compatibility of the resin material (B) can thus be attained in the early stage of vulcanization. In the present invention, a rubber or elastomer that has no clear melting point is regarded to have a melting point that is substantially lower than that of the high-melting-point resin of the core portion, unless the rubber or elastomer contains a material whose melting point or softening point is 150°C or higher.

In the rubber-reinforcing fiber constituting the rubber-fiber composite of the present invention, the high-melting-point resin having a melting point of 150°C or higher that constitutes the core portion is not particularly restricted as long as it is a known resin that is capable of forming a filament when melt spun. Specific examples thereof include polyester resins, such as polypropylene (PP), polyethylene terephthalate (PET), polybutylene terephthalate (PBT), polyethylene naphthalate (PEN) and polytrimethylene terephthalate (PTT); and polyamide resins, such as nylon 6, nylon 66 and nylon 12, and the high-melting-point resin is preferably a polyester resin, a polyolefin resin, or the like. The polyester resin is particularly preferably, for example, a polytrimethylene terephthalate (PTT) resin.

In the rubber-reinforcing fiber constituting the rubber-fiber composite of the present invention, the polytrimethylene terephthalate resin constituting the core portion may be a polytrimethylene terephthalate homopolymer or copolymer, or a mixture thereof with other mixable resin. Examples of a copolymerizable monomer of the polytrimethylene terephthalate copolymer include acid components, such as isophthalic acid, succinic acid and adipic acid; glycol components, such as 1,4-butanediol and 1,6-hexanediol; polytetramethylene glycols; and polyoxymethylene glycols. The content of these copolymerizable monomers is not particularly restricted; however, it is preferably 10% by mass or less since these monomers reduce the flexural rigidity of the copolymer. Examples of a polyester resin that can be mixed with a polytrimethylene terephthalate-based polymer include polyethylene terephthalates and polybutylene terephthalates, and the polyester resin may be mixed in an amount of 50% by mass or less.

The intrinsic viscosity [$\eta$] of the above-described polytrimethylene terephthalate is preferably 0.3 to 1.2, more preferably 0.6 to 1.1. When the intrinsic viscosity is lower than 0.3, the strength and the elongation of the resulting fiber are reduced, whereas when the intrinsic viscosity is higher than 1.2, the productivity is deteriorated due to the occurrence of fiber breakage caused by spinning. The intrinsic viscosity [$\eta$] can be measured in a 35°C o-chlorophenol solution using an Ostwald viscometer. Further, the melting peak temperature of the polytrimethylene terephthalate, which is determined by DSC in accordance with JIS K7121, is preferably 180°C to 240°C, more preferably 200°C to 235°C. When the melting peak temperature is in a range of 180 to 240°C, high weather resistance is attained, and the bending elastic modulus of the resulting composite fiber can be increased.

As additives in a mixture comprising the above-described polyester resin, for example, a plasticizer, a softening agent, an antistatic agent, a bulking agent, a matting agent, a heat stabilizer, a light stabilizer, a flame retardant, an antibacterial agent, a lubricant, an antioxidant, an ultraviolet absorber, and/or a crystal nucleating agent can be added within a range that does not impair the effects of the present invention.

In addition, in order to improve the compatibility of the core portion and the sheath portion material at the resin interface, the above-described "ionomer (C3) whose degree of neutralization with a metal salt of an olefin-based copolymer containing a monomer of an unsaturated carboxylic acid or anhydride thereof is 20% or higher" according to the present invention can be mixed in a range of 2 to 40 parts by mass.

The high-melting-point resin (A) constituting the core portion is, for example, preferably a high-melting-point polyolefin resin, particularly preferably a polypropylene resin, more preferably a crystalline homopolypropylene polymer, still more preferably an isotactic polypropylene.

In the core-sheath type composite fiber used in the rubber-fiber composite of the present invention, the core portion is constituted by the high-melting-point resin (A) having a melting point of 150°C or higher, and this core portion is not melted even in a rubber vulcanization process. When the present inventor performed 15-minute vulcanization at 195°C, which is higher than the temperature used in ordinary industrial vulcanization conditions, and observed the cross-section of a cord embedded in a rubber after the vulcanization, it was found that, although the low-melting-point resin material (B) of the sheath portion was melted and its originally circular cross-section was deformed, the high-melting-point resin (A) of the core portion maintained the circular cross-sectional shape of the core portion after core-sheath composite spinning and, without being completely melted to form a melt, retained a tensile strength at break of not less than 150 N/mm$^2$ as a cord.

In this manner, the present inventor discovered that, as long as the melting point of the resin constituting the core portion of a cord is 150°C or higher, the cord is not melted or broken even when it is subjected to a 195°C heating treatment during vulcanization of a rubber article, and that the rubber-reinforcing fiber constituting the rubber-fiber composite of the present invention can thus be obtained. The reason why the cord maintained its material strength and exhibited heat resistance even at a processing temperature higher than the intrinsic melting point of the resin as described above is believed to be because the melting point was increased to be higher than the intrinsic melting point of the resin since the cord was embedded in the rubber and thus vulcanized at a fixed length and this created a condition of fixed-length restriction where fiber shrinkage does not occur, which is different from a method of measuring the melting point without restricting the resin shape as in JIS K7121. It is known that, as a thermal phenomenon in a situation unique to fiber materials, the melting point is sometimes increased under such a measurement condition of "fixed-length restriction" where fiber shrinkage does not occur (Handbook of Fibers 2nd Edition, published on March 25, 1994; edited by The Society of Fiber Science and Technology, Japan; published by Maruzen Co., Ltd.; page 207, line 13). With regard to this phenomenon, the melting point of a substance is represented by a formula "Tm = ΔHm/ΔSm" and, in this formula, the crystallization degree and the equilibrium melting enthalpy (ΔHm) do not change for the same fiber resin. However, it has been considered that, when a tension is applied in the cord direction at a fixed length (or the cord is thus stretched) and thermal shrinkage of the cord during melting is inhibited, orientational relaxation of the molecular chains oriented along the cord direction hardly occurs due to melting and the melting enthalpy (ΔSm) is thus reduced, as a result of which the melting point is increased. In such a resin material constituting the rubber-fiber composite of the present invention, however, there has not been known any finding that is obtained by examining a cord material presumed to form a melt at a resin melting point or higher in accordance with a JIS method at a temperature corresponding to a rubber vulcanization process and studying a resin material suitable for reinforcement of a rubber article, which resin material can be directly adhered to a rubber through thermal fusion and provide satisfactory tensile rigidity of the core portion even under heating in a vulcanization process.

As a preferred example of the rubber-fiber composite of the present invention, when a polypropylene resin or a PTT resin is used as the resin having a melting point of 150°C or higher that constitutes the core portion, although the resulting cord has a lower modulus than known high-elasticity cords of 66 nylon, polyethylene terephthalate, aramid and the like that are conventionally used as tire cords, since the cord has an intermediate elastic modulus between those of such a conventional cord and a rubber, the cord can be arranged at a specific position in a tire where a conventional tire cord could not be arranged, which is one characteristic feature of the present invention.

For example, the production of a rubber article such as a tire includes a vulcanization process in which members composed of a rubber or a coated cord material are assembled and a molded unvulcanized original form such as a green tire is placed in a mold and subsequently pressed against the mold from inside by high-temperature and high-pressure steam using a rubber balloon-shaped compression equipment called "bladder". In this process, when the modulus of the cord is excessively high, the cord material sometimes does not extend and expand along with the rubber material in the course of transition from the state of being arranged in the molded unvulcanized original form such as a green tire to the state of being pressed against the mold by high-temperature and high-pressure steam and, in such a case, the cord serves as a so-called "cutting thread" (a thread that cuts a lump of clay or the like) to cause a defect such as cutting and separation of the rubber material assembled in the unvulcanized original form. Therefore, without implementing a countermeasure in the production, it is difficult to arrange a high-modulus cord in a tire by a conventional production method. Particularly, in a structure in which a cord is arranged along the tire circumferential direction in a tire side portion, since the cord is jointed in an annular form, a problem in the production that the cord, which is pressed by high-temperature and high-pressure steam and thereby bears a tension, moves in the tire radial direction while cutting the rubber material on the bead side is likely to occur. On the other hand, in the cord of the rubber-fiber composite of the present invention, since its cord material is also more stretchy than a conventional high-elasticity cord, the production of a rubber article such as a tire can be carried out by a conventional method even when the rubber article has such a product structure or an arrangement in which a cord would serve as a "cutting thread" during the production and processing and thus could not be arranged. Such an increase in the freedom in the design of tire member arrangement is also a characteristic feature of the rubber-fiber composite of the present invention.

In the fiber of the rubber-fiber composite of the present invention, the resin material (B) constituting the sheath portion is characterized by comprising an olefin-based copolymer composition (X), and this olefin-based copolymer composition (X) comprises a propylene-$\alpha$-olefin copolymer (C1), and at least polymer selected from a propylene-nonconjugated diene copolymer (C2), an ionomer (C3) whose degree of neutralization with a metal salt of an olefin-based copolymer containing a monomer of an unsaturated carboxylic acid or anhydride thereof is 20% or higher, wherein said ionomer (C3) is an ionomer of an ethylene-ethylenically unsaturated carboxylic acid copolymer, or an ionomer of an unsaturated carboxylic acid polymer or a polyolefin, and wherein the content of said ionomer (C3) is 2 to 40 parts by mass taking the amount of the olefin-based composition (X) as 100 parts by mass, and an olefin-based homopolymer or olefin-based copolymer (D) selected from an $\alpha$-olefin and a polyolefin rubber, excluding (C1) and (C2).

In the propylene-$\alpha$-olefin copolymer (C1) according to the present invention, any known $\alpha$-olefin monomer can be used as a comonomer copolymerized with propylene. Monomers that can be used as the comonomer are not restricted to a single kind, and preferred comonomers also include multi-component copolymers in which two or more kinds of monomers are used as in terpolymers. Further, other monomer(s) copolymerizable with polypropylene may be incorporated as long as the intended effects of the present invention can be attained, for example, in a range of 5% by mole or less. In the present invention, the propylene-$\alpha$-olefin copolymer (C1) also encompasses polymers containing such monomers. Preferably, a propylene-ethylene random copolymer, a butene-propylene random copolymer can be used.

Examples of the $\alpha$-olefin include those having 2 or 4 to 20 carbon atoms, specifically, linear or branched $\alpha$-olefins, such as ethylene, propylene, 1-butene, 1-pentene, 1-hexene, 1-octene, 1-heptene, 4-methyl-pentene-1, 4-methyl-hexene-1, and 4,4-dimethylpentene-1; and cyclic olefins, such as cyclopentene, cyclohexene, and cycloheptene. These $\alpha$-olefins may be used individually, or in combination of two or more thereof.

Thereamong, ethylene, 1-butene, 4-methyl-1-pentene, 1-hexene and 1-octene are preferred, and ethylene and 1-butene are particularly preferred.

The propylene content in the propylene-$\alpha$-olefin random copolymer (C1) is preferably 20 to 99.7% by mole, more preferably 75 to 99.5% by mole, still more preferably 95 to 99.3% by mole. A propylene content of less than 20% by mole may lead to insufficient impact resistance strength due to, for example, formation of a polyethylene crystal component. Meanwhile, a propylene content of 75% by mole or higher is generally preferred since good spinnability is attained. Further, when the propylene content is 99.7% by mole or less, addition polymerization of other monomer such as ethylene that copolymerizes with polypropylene leads to an increased molecular chain randomness, so that a cord that is easily thermally fused is obtained. Moreover, the ethylene content is preferably 0.3% by mole to 80% by mole. An ethylene content of higher than 80% by mole is not preferred since the sheath portion does not have sufficient fracture resistance in the fusion thereof with an adherend rubber, and a crack is thus generated in the sheath portion, making fracture more likely to occur. Meanwhile, when the ethylene content is 5% by mole or less, the fusibility of the resin materials of the sheath portion coming into contact with each other is reduced at the time of spinning, so that preferred spinnability is attained. Further, when the ethylene content is less than 0.3% by mole, since disturbance of the molecular chain orientation caused by addition polymerization of the ethylene monomer with a polymer composed of polypropylene is reduced and the crystallinity is consequently increased, the thermal fusibility of the resins of the sheath portion is deteriorated.

The propylene-$\alpha$-olefin copolymer (C1) is preferably a random copolymer in which the block content, which is determined by NMR measurement of a repeating unit of the same vinyl compound moiety, is 20% or less of all aromatic vinyl compound moieties. The reason why such a random copolymer is preferred is because, with the propylene-$\alpha$-olefin copolymer (C1) having a low crystallinity and being less oriented, fusibility attributed to the compatibility of molecular chains is likely to be obtained at the time of heating when the adherend rubber is a rubber composition containing a rubber component having low orientation, such as butadiene, natural rubber or SBR.

According to the present invention the propylene-$\alpha$-olefin copolymer (C1) is used in combination with one or more polymer selected from a propylene-based copolymer (C2) containing propylene and a nonconjugated diene, an ionomer (C3) whose degree of neutralization with a metal salt of an olefin-based copolymer containing a monomer of an unsaturated carboxylic acid or anhydride thereof is 20% or higher, wherein said ionomer (C3) is an ionomer of an ethylene-ethylenically unsaturated carboxylic acid copolymer, or an ionomer of an unsaturated carboxylic acid polymer or a polyolefin, and wherein the content of said ionomer (C3) is 2 to 40 parts by mass taking the amount of the olefin-based composition (X) as 100 parts by mass, and an olefin-based homopolymer or olefin-based copolymer (D) selected from an $\alpha$-olefin and a polyolefin rubber, excluding (C1) and (C2).

The reason for using the propylene-$\alpha$-olefin copolymer (C1) is because an olefin-based polymer containing propylene is allowed to have a melting point that is lower than the melting point (165°C) of a propylene homopolymer by incorporating therein an $\alpha$-olefin as a comonomer, and a melting point of 90°C to 140°C or so is suitable for the resin material of the sheath portion which has a melting point that is lower than the melting point (150°C or higher) of the core portion resin as defined in the present invention. In addition, by incorporating other comonomer into the propylene molecular chain, the crystallinity and the orientation are reduced, so that good thermal fusibility is attained. Moreover, as compared to the above-described propylene-nonconjugated diene copolymer (C2), the propylene-$\alpha$-olefin copolymer (C1) has lower cohesiveness due to the absence of a diene-based monomer, and the blocking properties, such as a property that processed cords adhere with each other even when they are superimposed with one another and a pressure is applied thereto, are relatively small in thermally fusible resins; therefore, spinning workability is easily controlled at an appropriate level.

Accordingly, in the present invention, the resin of the olefin-based copolymer composition (X) which comprises a propylene-$\alpha$-olefin copolymer (C1) as a matrix component is mixed with the propylene-based copolymer (C2) containing propylene and nonconjugated diene, which has good adhesiveness with an adherend rubber but shows strong rubber-like cohesiveness, or with the ionomer (C3), which shows good compatibility with the core portion resin and the like but has a low melting point and whose degree of neutralization with a metal salt of an olefin-based copolymer containing a monomer of an unsaturated carboxylic acid or anhydride thereof is 20% or higher, and/or the olefin-based homopolymer or olefin-based copolymer (D) selected from an $\alpha$-olefin and a polyolefin rubber, excluding (C1) and (C2), conflicting physical properties in a single olefin-based polymer can be satisfied.

It is noted here that the MFR190 of the propylene-ct-olefin copolymer (C1), which is measured in accordance with JIS K7210, is preferably 3 to 100 g/10 min, more preferably 5 to 40 g/10 min, still more preferably 5 to 30 g/10 min. When the MFR190 is higher than 100 g/10 min, the resin material of the sheath portion has excessively high fluidity, whereas when the MFR190 is 3 g/10 min or higher, a uniform rubber-reinforcing fiber having good workability in the spinning process and stretching process can be easily obtained.

Further, the melting point of the propylene-$\alpha$-olefin copolymer (C1), which is measured in accordance with JIS K7121, is not higher than the melting point of the high-melting-point resin (A) of the core portion. The lower limit of the melting point is not particularly restricted; however, it is preferably 90°C or higher, particularly preferably 110°C or higher, more preferably 120°C or higher. In cases where a resin which has a melting point of lower than 90°C and good fusibility is used as the resin material (B) of the sheath portion, rather than applying the resin by itself, it is more preferred to use an olefin-based polymer having a higher melting point in combination and mix it at a content ratio of, for example, 25% by mass or less, since this makes air bubbles less likely to be incorporated into the resin material (B) of the sheath portion during vulcanization, so that crack development caused by strain and the like during traveling is less likely to occur, and a decrease in fatigue resistance and durability of adhesion is thereby limited.

The propylene-nonconjugated diene copolymer (C2) according to the present invention can be obtained by polymerizing propylene with a known nonconjugated diene. Monomers that can be used as a comonomer are not restricted to a single kind, and preferred comonomers also include multi-component copolymers in which two or more kinds of monomers are used as in terpolymers. Further, other monomer(s) copolymerizable with polypropylene may be incorporated as long as the intended effects of the present invention can be attained, for example, in a range of 5% by mole or less, and the propylene-nonconjugated diene copolymer (C2) also encompasses polymers containing such monomers.

Preferred examples thereof include 1-butene-propylene copolymers.

Examples of a monomer of the nonconjugated diene include 5-ethylidene-2-norbornene, dicyclopentadiene, 1,4-hexadiene, cyclooctadiene, 5-vinyl-2-norbornene, 4,8-dimethyl-1,4,8-decatriene, and 4-ethylidene-8-methyl-1,7-nonadiene.

Particularly, it is preferred to introduce a nonconjugated diene to ethylene and propylene as a third component since a component that is adhesive at the interface with an adherend rubber and has co-vulcanizability with sulfur is incorporated by the introduction of a component of an ethylene-propylene-diene copolymer (EPDM).

The propylene content in the propylene-nonconjugated diene copolymer is preferably 20 to 99.7% by mole, more preferably 30 to 75% by mole, still more preferably 40 to 60% by mole. When the propylene content is less than 20% by mole, a blocking phenomenon that the resin materials of the sheath portion of the cord adhere with each other is likely to occur after spinning. Further, when the propylene content is less than 30% by mole, friction on the surface during spinning is likely to cause disturbance of the resin material surface of the sheath portion. Meanwhile, when the propylene content is higher than 99.7% by mole and the content of other monomer copolymerized with polypropylene is thus small, since the molecular chain randomness is reduced and the crystallinity of polypropylene is increased, the resulting cord has low fusibility. Further, a monomer content of higher than 80% by mole in the nonconjugated diene is not preferred since the sheath portion does not have sufficient fracture resistance in the fusion thereof with an adherend rubber, and a crack is thus generated in the sheath portion, making fracture more likely to occur. Moreover, when the ethylene content is less than 0.3% by mole, the compatibility with an adherend rubber and the improvement in adhesion that is attributed to co-vulcanization are reduced.

According to the investigation of the present inventor, it is preferred to use the propylene-nonconjugated diene copolymer (C2) in combination with other propylene-$\alpha$-olefin copolymer (C1) and the ionomer (C3) whose degree of neutralization with a metal salt of an olefin-based copolymer containing a monomer of an unsaturated carboxylic acid or anhydride thereof is 20% or higher.

The reason for this is as follows. When the olefin-based copolymer (C2) containing a conjugated diene such as EPDM is used in the resin material of the sheath portion, the adhesiveness is improved by the incorporation of a diene that is cross-linkable with sulfur. However, since the olefin-based copolymer (C2) has properties attributed to an amorphous and soft polymer, which is a characteristic of a rubber-like polymer, the olefin-based copolymer (C2) is usually a resin for which spinning is difficult due to amorphous elongation and breakage caused by the spinning stress in the use as a fiber material. Still, when the olefin-based copolymer (C2) is used in the sheath portion of the core-sheath fiber, since the resin of the core portion bears the spinning stress, spinning can be performed as long as the resin is adhered to the surface of the sheath portion. Nevertheless, as for the cord surface properties in spinning, when a large amount of a rubber-like polymer component is used, for example, a reduction in spinning rate that is performed to prevent disturbance of the surface in spinning process leads to a reduction in the productivity in processing and, when spun cords are superimposed with one another and a pressure is applied thereto, not only a blocking phenomenon in which the cords are adhered with each other occurs but also, for example, the cords may be stuck with each other after being wound on a bobbin and the cord surface may be damaged by unwinding.

Therefore, as one preferred method for mutually achieving both satisfactory cord spinnability and satisfactory production properties such as blocking resistance while improving the adhesion with a rubber, it is possible to use, in the resin components constituting the resin material (B), the propylene-nonconjugated diene copolymer (C2) along with the propylene-$\alpha$-olefin copolymer (C1), the ionomer (C3) whose degree of neutralization with a metal salt of an olefin-based copolymer containing a monomer of an unsaturated carboxylic acid or anhydride thereof is 20% or higher or the olefin-based homopolymer or olefin-based copolymer (D) selected from an $\alpha$-olefin and a polyolefin rubber, excluding (C1) and (C2), which is in the form of a resin having a low rubber-like elasticity and used as a resin matrix phase that is the main component of the sheath portion, and to disperse the propylene-nonconjugated diene copolymer (C2) therein and mix the resultant.

The MFR190 of the propylene-nonconjugated diene copolymer (C2), which is measured in accordance with JIS K7210, is preferably 2 to 40 g/10 min, more preferably 3 to 30 g/10 min. When the MFR190 is higher than 40 g/10 min, the resin material of the sheath portion has excessively high fluidity, whereas when the MFR190 is 2 g/10 min or higher, a uniform rubber-reinforcing fiber having good workability in the spinning process and stretching process can be easily obtained. Further, the melting point of the propylene-nonconjugated diene copolymer (C2), which is measured in accordance with JIS K7121 (without application of a tension or the like to the resin), is not higher than the melting point of the core portion resin (A). The lower limit of the melting point is not particularly restricted; however, it is preferably 90°C or higher, particularly preferably 110°C or higher, more preferably 120°C or higher.

The ionomer (C3) according to the present invention, whose degree of neutralization with a metal salt of an olefin-based copolymer containing a monomer of an unsaturated carboxylic acid or anhydride thereof is 20% or higher, is an ionomer of an ethylene-ethylenically unsaturated carboxylic acid copolymer, or an ionomer of an unsaturated carboxylic acid polymer of a polyolefin. Of these copolymers, the ethylene-ethylenically unsaturated carboxylic acid copolymer can be obtained by polymerizing ethylene with a known ethylenically unsaturated carboxylic acid. Monomers that can be used as a comonomer are not restricted to a single kind, and preferred comonomers also include multi-component copolymers in which two or more kinds of monomers are used as in terpolymers. Further, other monomer(s) copolymerizable with polypropylene may be incorporated as long as the intended effects of the present invention can be attained, for example, in a range of 5% by mole or less, and the ionomer (C3) also encompasses polymers containing such monomers.

For example, an ethylene-methacrylic acid copolymer is preferred since it yields a core-sheath composite fiber having excellent fusibility.

Examples of an ethylenically unsaturated carboxylic acid monomer include vinyl esters, such as vinyl acetate and vinyl propionate; acrylic acid esters, such as methyl acrylate, ethyl acrylate, isopropyl acrylate, *n*-butyl acrylate, isobutyl acrylate, and isooctyl acrylate; methacrylic acid esters, such as methyl methacrylate and isobutyl methacrylate; and maleic acid esters, such as dimethyl maleate and diethyl maleate.

Thereamong, methyl acrylate and methyl methacrylate are preferred.

The content of the ethylenically unsaturated carboxylic acid monomer in the above-described ethylene-ethylenically unsaturated carboxylic acid copolymer is preferably 0.5 to 35% by mass, more preferably 1 to 25% by mass, still more preferably 2 to 10% by mass. When the ethylenically unsaturated carboxylic acid content is less than 0.5% by mass, the effect of improving the compatibility between the polymers of the olefin-based copolymer composition (X) and the compatibility with the core portion resin, which effect is provided by the ethylene-ethylenically unsaturated carboxylic acid copolymer, is barely exhibited, and the fusibility is thus deteriorated. Meanwhile, when the ethylenically unsaturated carboxylic acid content is higher than 35% by mass, the polarity of the polymers of the olefin-based copolymer composition (X) is increased and, in cases where the polymer (e.g., butadiene rubber or styrene rubber) in the rubber composition of an adherend rubber is nearly nonpolar, since the resulting difference in polarity causes a reduction in compatibility, the fusibility is deteriorated.

In the present invention, as the ionomer (C3) whose degree of neutralization with a metal salt of an olefin-based copolymer containing a monomer of an unsaturated carboxylic acid or anhydride thereof is 20% or higher, an ionomer obtained by neutralizing, with a metal, some or all of the carboxyl groups of, for example, an ethylene-ethylenically unsaturated carboxylic acid copolymer or a modification product of a polyolefin with an unsaturated carboxylic acid can be used. Examples of the metal species constituting such an ionomer include monovalent metals such as lithium, sodium, and potassium; and polyvalent metals such as magnesium, calcium, zinc, copper, cobalt, manganese, lead, and iron. Thereamong, the metal species is preferably sodium or zinc.

According to the investigation by the present inventor, for the use in the resin material (B) of the sheath portion, an ionomer obtained by neutralizing an ethylene-ethylenically unsaturated carboxylic acid copolymer with a metal at a degree of 20% or higher is preferred. The reason for this is as follows. Once the resin material (B) of the sheath portion generates a proton $H^+$-donating acidic atmosphere due to its functional group such as a carboxylic acid group, even if sulfur migrates from an adherend rubber to the resin material (B) of the sheath portion and is thereby activated, since a polyvulcanized product is reduced by protons $H^+$ and thus cannot be formed, an environment in which strong adhesion with the adherend rubber cannot be attained is likely to be created. Therefore, the ethylene-ethylenically unsaturated carboxylic acid copolymer (C3) is preferably in the form of an ionomer and, in order to allow the composition of the resin material (B) of the sheath portion to maintain a Lewis basic atmosphere, it is necessary to limit the content of the resin material (B) of the sheath portion in the rubber-reinforcing fiber or to add the vulcanization accelerator or the like according to the present invention; however, such a finding has not been known previously. The degree of neutralization of carboxylic acid with a metal salt is preferably 100% or higher; however, since carboxylic acid is a weak acid, the effects of the present invention can be attained even when the degree of neutralization of carboxylic acid is 20%. The degree of neutralization of carboxylic acid is preferably 20% to 250%, more preferably 70% to 150%.

In the present invention, the degree of neutralization is defined by the following formula:

$$\text{Degree of neutralization (\%)} = 100 \times [(\text{Number of moles of cation component in resin component} \times \text{Valence of cation component}) + (\text{Number of moles of metal component in basic inorganic metal compound} \times \text{Valence of metal component})]/(\text{Number of moles of carboxyl group in resin component})$$

The amount of a cation component and that of an anion component can be determined by a method of examining the degree of neutralization of an ionomer, such as neutralization titration.

From known documents such as Japanese Unexamined Patent Application Publication No. H05-163618 and Japanese Unexamined Patent Application Publication No. H07-238420, it has been known that the addition of the ionomer (C3) whose degree of neutralization with a metal salt of an olefin-based copolymer containing a monomer of an unsaturated carboxylic acid or anhydride thereof is 20% or higher improves the compatibility between the core and the sheath of a core-sheath fiber and that, for example, particularly when the core portion is a polyester or a polyamide resin material and the sheath portion is a resin material of an olefin-based polymer, the addition of the ionomer (C3) can improve the adhesion between the core and the sheath at their interface. In the present invention, the content of the ionomer (C3) whose degree of neutralization with a metal salt of an olefin-based copolymer containing a monomer of an unsaturated carboxylic acid or anhydride thereof is 20% or higher is 2 to 40 parts by mass, more preferably 2 to 25 parts by mass, still more preferably 3 to 15 parts by mass, taking the amount of the olefin-based copolymer composition (X) as 100 parts by mass. When the content of the ionomer (C3) whose degree of neutralization with a metal salt of an olefin-based copolymer containing a monomer of an unsaturated carboxylic acid or anhydride thereof is 20% or higher is less than 2 parts by mass, since the compatibility between the core and the sheath of the core-sheath fiber is not improved, the adhesion is hardly enhanced. Meanwhile, when the content of the ionomer (C3) is higher than 40 parts by mass, air bubbles may be incorporated into the composite during vulcanization and voids may be thereby formed. When air bubbles are formed in this manner at a position where the rubber and the resin of the rubber-reinforcing fiber is different in material rigidity, fracture which acts as a crack-generating nucleus is likely to occur due to fatigue caused by repeated load during traveling and the like, so that the adhesion with the rubber is deteriorated.

The ionomer (C3) whose degree of neutralization with a metal salt of an olefin-based copolymer containing a monomer of an unsaturated carboxylic acid or anhydride thereof is 20% or higher is not particularly restricted as long as it can be melt-spun together with the composition composed of an aliphatic polyester and a polyolefin that is used in the sheath portion and, usually, the MFR190 measured in accordance with JIS K7210 is in a range of preferably 0.01 to 200 g/10 min, more preferably 0.1 to 100 g/10 min, still more preferably 3 to 60 g/10 min. The melting point of the above-described ethylene-ethylenically unsaturated carboxylic acid copolymer or ionomer thereof, which is measured in accordance with JIS K7121, is not higher than the melting point of high-melting-point resin (A) of the core portion. The lower limit of the melting point is not particularly restricted; however, it is preferably 90°C or higher, particularly preferably 110°C or higher, more preferably 120°C or higher.

Preferred examples of the olefin-based homopolymer or olefin-based copolymer (D) selected from an α-olefin and a polyolefin rubber excluding (C1) and (C2) according to the present invention include ethylene homopolymers, such as high-density polyethylenes, low-density polyethylenes, and linear low-density polyethylenes; propylene homopolymers such as isotactic polypropylenes, atactic polypropylenes, and syndiotactic polypropylenes; α-olefin homopolymers (D1), such as 4-methylpentene-1 homopolymers and 1-butene homopolymers; and polyolefin rubbers (D2) having an unsaturated hydrocarbon bond in the main chain according to the classification of JIS K6397, such as polybutadienes, polyisoprenes, and polynorbornenes. Among these α-olefin homopolymers (D1) and polyolefin rubbers (D2), one which contains about 40 or less other monomers with respect to 1,000 monomers constituting repeating units can be used as the olefin-based copolymer (D). In the present invention, although not particularly restricted, the α-olefin homopolymers (D1) are particularly preferred and, for example, a high-density polyethylene or a polypropylene which is controlled to have low stereoregularity and whose melting point is thereby controlled to be low using a catalyst in propylene polymerization (e.g., L-MODU™ manufactured by Idemitsu Kosan Co., Ltd.) can be used. These homopolymers can also be used as a mixture, rather than using them individually.

Generally, the α-olefin homopolymers (D1) often exhibit the properties of a highly crystalline thermoplastic material, such as a polyethylene or a polypropylene. Conventionally, in core-sheath olefin fibers, it has been widely studied to blend such an α-olefin homopolymer with other olefin-based polymer. In the rubber-reinforcing fiber constituting the rubber-fiber composite of the present invention, since the α-olefin homopolymer (D1) has a low rubber-like elasticity and shows good moldability into a fiber form at the time of spinning the resin, the moldability into a fiber form at the time of spinning the resin can be ensured by using the α-olefin homopolymer (D1) as the resin matrix of the resin material (B) of the sheath portion and mixing it with other polymer having a low moldability into a fiber form in spinning selected from a propylene-$\alpha$-olefin copolymer (C1), the propylene-based copolymer (C2) containing propylene and nonconjugated diene, or the ionomer (C3) whose degree of neutralization with a metal salt of an olefin-based copolymer containing a monomer of an unsaturated carboxylic acid or anhydride thereof is 20% or higher, wherein said ionomer (C3) is an ionomer of an ethylene-ethylenically unsaturated carboxylic acid copolymer, or an ionomer of an unsaturated carboxylic acid polymer or a polyolefin, and wherein the content of said ionomer (C3) is 2 to 40 parts by mass taking the amount of the olefin-based composition (X) as 100 parts by mass, and an improvement in adhesiveness appropriate for rubber reinforcement can be achieved.

Examples of the above-described polyethylenes include linear low-density polyethylenes and high-density polyethylenes, as well as polymers in which crystallization degree is intentionally lowered by imparting thereto a short branched structure through partial copolymerization with an $\alpha$-olefin such as 1-butene.

Examples of the polypropylenes include those having stereoregularity, such as isotactic, syndiotactic and atactic polypropylenes, and the polypropylene used in the resin material (B) of the sheath portion is particularly preferably a polypropylene which has good compatibility with an adherend rubber and low stereo-orientation. Examples of such a polypropylene include propylene having a low crystallinity with the use of a single-site catalyst, such as L-MODU™ (trade name) manufactured by Idemitsu Kosan Co., Ltd. The use of such a propylene in the resin material (B) of the sheath portion is preferred since the bond between the core and the sheath can thereby be made strong when a polypropylene is used in the core portion resin.

In addition to these polyethylenes and polypropylenes, poly-1-butene, which is highly miscible in a molten state with other olefin components such as a polypropylene, is also mentioned as a preferred example.

As for the above-described $\alpha$-olefin homopolymers, the MFR190 measured in accordance with JIS K7210 is in a range of preferably 0.01 to 200 g/10 min, more preferably 0.1 to 100 g/10 min, still more preferably 3 to 60 g/10 min. Further, the melting point is preferably not higher than the melting point of the core portion resin (A). The lower limit of the melting point is not particularly restricted; however, it is preferably 90°C or higher.

In the olefin-based homopolymer or olefin-based copolymer (D) selected from an $\alpha$-olefin and a poly olefin rubber, excluding (C1) and (C2), preferred examples of the polyolefin rubber (D2) having an unsaturated hydrocarbon bond in the main chain include polymers obtained by polymerizing low-polarity monomers, such as polybutadienes, polyisoprenes and polynorbornenes. When such a low-crystalline rubber content is incorporated into the resin material (B) of the sheath portion, adhesiveness with a rubber component (e.g., natural rubber, polybutadiene, or SBR) contained in an adherend rubber is easily attained; however, since the spinnability and blocking resistance in spinning are deteriorated by the rubber-like physical properties of, for example, being easily stretched amorphously, it is preferred to mix the low-crystalline rubber content with other polymer showing good fiber-forming properties in spinning and to use the resulting mixture as the olefin-based copolymer composition (X), rather than using the low-crystalline rubber content individually in the resin material of the sheath portion.

Examples of a method of producing these olefin-based polymers include slurry polymerization, vapor-phase polymerization and liquid-phase bulk polymerization, in which an olefin polymerization catalyst such as a Ziegler catalyst or a metallocene catalyst is used and, as a polymerization system, either a batch polymerization system or a continuous polymerization system may be employed.

In the present invention, the olefin-based copolymer composition (X) contained in the resin material (B) of the sheath portion comprises the propylene-$\alpha$-olefin copolymer (C1), and at least one polymer selected from the propylene-nonconjugated diene copolymer (C2), the ionomer (C3) whose degree of neutralization with a metal salt of an olefin-based copolymer containing a monomer of an unsaturated carboxylic acid or anhydride thereof is 20% or higher, wherein said ionomer (C3) is an ionomer of an ethylene-ethylenically unsaturated carboxylic acid copolymer, or an ionomer of an unsaturated carboxylic acid polymer or a polyolefin, and wherein the content of said ionomer (C3) is 2 to 40 parts by mass taking the amount of the olefin-based composition (X) as 100 parts by mass, and the olefin-based homopolymer or olefin-based copolymer (D) selected from an $\alpha$-olefin and a polyolefin rubber, excluding (C1) and (C2), and it is preferred that the resin material (B) contain the propylene-$\alpha$-olefin copolymer (C1) in a range of 20 to 98 parts by mass, and at least one of the propylene-nonconjugated diene copolymer (C2) in a range of 2 to 80 parts by mass, the ionomer (C3), whose degree of neutralization with a metal salt of an olefin-based copolymer containing a monomer of an unsaturated carboxylic acid or anhydride thereof is 20% or higher, wherein said ionomer (C3) is an ionomer of an ethylene-ethylenically unsaturated carboxylic acid copolymer, or an ionomer of an unsaturated carboxylic acid polymer or a polyolefin, and wherein the content of said ionomer (C3) is 2 to 40 parts by mass taking the amount of the olefin-based composition (X) as 100 parts by mass, in a range of 2 to 40 parts by mass, and the olefin-based homopolymer or olefin-based copolymer (D) selected from an $\alpha$-olefin and a polyolefin rubber excluding (C1) and (C2) in a range of 2 to 75 parts by mass, with respect to 100 parts by mass of the olefin-based copolymer composition (X).

In the present invention, it is preferred that the resin material (B) constituting the sheath portion further contain, as a compatibilizing component, a styrene-based elastomer (E) containing a monomolecular chain in which mainly styrene monomers are arranged in series (hereinafter, also referred to as "styrene block"). By incorporating the styrene-based elastomer (E), the compatibility between the resin material (B) and a rubber can be improved, and their adhesion can thereby be improved.

That is, the low-melting-point resin material (B) is a composition containing, as a main component, a polyolefin resin such a homopolymer (e.g., polyethylene or polypropylene) or an ethylene-propylene random copolymer, which is a resin having the melting point and composition defined in the present invention, and it is generally known that a mixed resin composition thereof has a phase-separated structure. Therefore, by adding the styrene-based elastomer (E) as a block copolymer composed of a soft segment and a hard segment, compatibilization of the phases at their interface can be facilitated. The styrene-based elastomer (E) preferably comprises a segment which shows adhesiveness at the interface between the high-melting-point resin (A) that is a core component and the resin material (B) that is a sheath component, and interacts with the molecular structure of a styrene-butadiene rubber (SBR), a butadiene rubber (BR), a butyl rubber (IIR), a polyisoprene structure-containing natural rubber (IR) or the like that is contained in the sheath component and adherend rubber, since such a styrene-based elastomer improves the adhesion with an adherend rubber.

As the styrene-based elastomer (E), specifically, a styrene-based block copolymer or a styrene-based graft polymer can be used, and one which contains styrene and a conjugated diolefin compound is preferred. Preferred examples thereof include polymers composed of a styrene-based polymer block unit that contains a monomolecular chain, in which mainly styrene monomers are arranged in series, and other conjugated diene compound; and hydrogenation products and modification products thereof.

As the styrene monomers constituting the block unit, for example, styrene, o-methylstyrene, *p*-methylstyrene, *p-tert*-butylstyrene, 1,3-dimethylstyrene, $\alpha$-methylstyrene, vinylnaphthalene, and vinyl anthracene can be used individually or in combination of two or more thereof and, thereamong, styrene is preferred.

As the other conjugated diene compound constituting the styrene-based elastomer (E), for example, 1,3-butadiene, isoprene, 1,3-pentadiene, 2,3-dimethyl-1,3-butadiene, 2-phenyl-1,3-butadiene, and 1,3-hexadiene can be used individually or in combination of two or more thereof and, thereamong, 1,3-butadiene is preferred.

The content of the styrene monomer in the styrene-based elastomer (E) is not particularly restricted; however, the content of a hard portion constituted by a styrene block unit (hard segment) is preferably 70% by mass or less so that the styrene-based elastomer (E) is easily compatibilized when mixed with the olefin resins contained in the resin material (B) of the sheath portion, and preferably not less than 3% by mass so that a compatibilization effect with materials other than the olefin resins is attained by the introduction of styrene block. From these standpoints, the content of the styrene monomer is preferably 3 to 70% by mass, more preferably 5 to 60% by mass, still more preferably 10 to 50% by mass.

More specific examples of the styrene-based elastomer (E) include styrene-based elastomer polymers, such as styrene-butadiene-based copolymers, styrene-isoprene-based block copolymers, styrene-ethylene-propylene-based block copolymers, styrene-isobutylene-based block copolymers, and copolymers having a styrene block at both terminals of a random copolymer block composed of styrene and butadiene, and the styrene-based elastomer (E) is preferably, for example, a completely or partially hydrogenated polymer obtained by hydrogenation of a double bond(s) of a block copolymer composed of styrene and butadiene. Further, the styrene-based elastomer (E) may be modified with a polar group, such as an amino group or maleic acid. Among such modifications, modification with an amino group is preferred.

Examples of other styrene-based elastomer include those which have a polyolefin resin as the main chain and a vinyl-based polymer on a side chain, such as olefin-based graft copolymers. A graft copolymer is a polymer in which other polymer(s) is/are arranged in the form of branches at some positions on a copolymer constituting a trunk and, in the present invention, a graft copolymer that contains a block in which mainly styrene monomers are connected with each other and arranged in a long series is defined as "styrene-based graft polymer".

As for the hydrogenation rate of the styrene-based elastomer (E), a part or the entirety of the styrene-based elastomer (E) may be hydrogenated. Hydrogenation is known to have an effect of improving the mechanical properties of a resin composition in which the thus hydrogenated styrene-based elastomer is incorporated, which effect is attributed to reduction in unsaturated bonds; therefore, from this standpoint, the effect can be obtained even when the hydrogenation rate is 100%. Meanwhile, when the styrene-based elastomer (E) contained in the resin material (B) of the sheath portion contains addition-polymerizable conjugated diene, since sulfur migrating from rubber is cross-linked at the time of vulcanization with an adherend rubber, the adhesiveness can be improved. From these standpoints, a hydrogenation product of the styrene-based elastomer (E) has a hydrogenation rate of preferably 10 to 100% or higher, more preferably 15 to 100%, still more preferably 20 to 60%.

Specific examples of the styrene-butadiene copolymers include styrene-butadiene copolymers (SBS), hydrogenated styrene-butadiene copolymers (HSBR), styrene-ethylene-butadiene copolymers (SEB), styrene-ethylene-butadiene-styrene copolymers (SEBS), styrene-butadiene-butylene-styrene copolymers (SBBS), and partially hydrogenated styrene-isoprene-butadiene-styrene copolymers. Examples of a polystyrene-poly(ethylene/propylene)-based block copolymer include polystyrene-poly(ethylene/propylene) block copolymers (SEP), polystyrene-poly(ethylene/propylene) block-polystyrene (SEPS), and polystyrene-poly(ethylene-ethylene/propylene) block-polystyrene (SEEPS), and examples of a polystyrene-poly(ethylene/butylene)-based block copolymer include polystyrene-poly(ethylene/butylene) block-polystyrene (SEBS) and polystyrene-poly(ethylene/butylene) block-crystalline polyolefin (SEBC). Examples of the styrene-isobutylene-based copolymers include polystyrene-polyisobutylene block copolymers (SIB) and polystyrene-polyisobutylene-polystyrene block copolymers (SIBS). Examples of the styrene-isoprene-based block copolymers include polystyrene-polyisoprene-polystyrene block copolymers (SIS).

Examples of the styrene-based graft polymer include olefin-based graft copolymers which have a low-density polyethylene as the main chain and a polystyrene in a side chain (LDPE-g-PS), and olefin-based graft copolymers which have a polypropylene as the main chain and a styrene-acrylonitrile copolymer in a side chain (PP-g-AS).

In the present invention, among these copolymers, from the standpoints of adhesion and compatibility with a rubber, a styrene-butadiene copolymer, a styrene-butadiene-butylene-styrene copolymer, a styrene-ethylene-butadiene-styrene copolymer, or a partial hydrogenation product of a block copolymer having a styrene block on both terminals and a random copolymer block of styrene and butadiene in the main chain, such as S.O.E. #609 manufactured by Asahi Kasei Chemicals Corporation, can be particularly preferably used. The styrene-based elastomer (E) may be used individually, or two or more thereof may be used in combination as appropriate.

Modification of introducing a polar group into a hydrogenation product of a styrene-butadiene-based copolymer is not particularly restricted and, for example, the modification can be performed by introducing an amino group, a carboxyl group or an acid anhydride group into the hydrogenation product. From the standpoints of compatibility and workability, the amount of the styrene-based elastomer (E) to be modified is usually $1.0 \times 10^{-3}$ to 1 mmol/g, preferably $5.0 \times 10^{-3}$ to 0.5 mmol/g, more preferably $1.0 \times 10^{-2}$ to 0.2 mmol/g, still more preferably $1.0 \times 10^{-2}$ to 0.1 mmol/g.

Among such modifications of introducing a polar group into a hydrogenation product, modification performed by introduction of an amino group is preferred. The reason for this is because, as described below, introduction of a compound having an unpaired electron-donating Lewis base functional group such as an amino group allows the hydrogenation product to also have an effect as a vulcanization accelerator (F). On the other hand, in the introduction of an acidic polar group, when a sulfur-active polysulfide is generated in a vulcanization reaction and the acidic polar group donates proton H$^+$ to the resulting polyvulcanized product, the vulcanization reaction may be inhibited due to generation of hydrogen sulfide HS and the like. Therefore, modification with a Lewis base group is preferred.

Examples of a compound used for the modification by introduction of an amino group include 3-lithio-1-[*N*,*N*-bis(trimethylsilyl)]aminopropane, 2-lithio-1-[*N*,*N*-bis(trimethylsilyl)]aminoethane, and 3-lithio-2,2-dimethyl-1-[*N*,*N*-bis(trimethylsilyl)]aminopropane, and examples of an unsaturated amine or derivative thereof include vinylamine.

Examples of a compound used for the modification by introduction of a carboxyl group or an acid anhydride group include unsaturated carboxylic acids and derivatives thereof and, for example, specifically, an *α,β*-unsaturated carboxylic acid or an *α,β*-unsaturated carboxylic acid anhydride is preferred. Specific examples thereof include *α,β*-unsaturated monocarboxylic acids, such as acrylic acid and methacrylic acid; *α,β*-unsaturated dicarboxylic acids, such as maleic acid, succinic acid, itaconic acid, and phthalic acid; *α,β*-unsaturated monocarboxylates, such as glycidyl acrylate, glycidyl methacrylate, hydroxyethyl acrylate, and hydroxymethyl methacrylate; and *α,β*-unsaturated dicarboxylic acid anhydrides, such as maleic anhydride, succinic anhydride, itaconic anhydride, and phthalic anhydride.

The weight-average molecular weight of the styrene-based elastomer (E) is not particularly restricted; however, it is preferably 30,000 or greater from the standpoint of controlling the heat resistance so that the thermal deformation temperature of the resin material (B) of the sheath portion is not lowered, and preferably 450,000 or less in order to make it easier to attain fluidity at the time of kneading the resin material(s) of the sheath portion before spinning. From these standpoints, the weight-average molecular weight the styrene-based elastomer (E) is preferably 30,000 to 450,000, more preferably 50,000 to 400,000, still more preferably 80,000 to 300,000.

The content of the styrene-based elastomer (E) in the resin material (B) can be 1 to 150 parts by mass, particularly 2 to 90 parts by mass, more particularly 3 to 40 parts by mass, with respect to 100 parts by mass of the olefin-based copolymer composition (X). By controlling the content of the styrene-based elastomer (E) in the above-described range, the effect of improving the compatibility between the resin material (B) and a rubber can be favorably attained.

In the present invention, it is preferred that the resin material (B) constituting the sheath portion further contain a vulcanization accelerator (F). By incorporating the vulcanization accelerator (F), interaction takes place at the rubber interface due to an effect of the sulfur content contained in an adherend rubber to be in a transition state between the vulcanization accelerator (F) and a polyvulcanized product, and the amount of sulfur migrating from the rubber to the surface of the resin material (B) of the sheath portion or into the resin is increased. Further, when a conjugated diene that can be vulcanized with sulfur is contained as a component of the resin material (B) of the sheath portion, co-vulcanization reaction with the adherend rubber is facilitated, so that the adhesion of the resin material (B) and the rubber can be further improved.

The vulcanization accelerator (F) according to the present invention is selected from Lewis base compounds (F1) and from sulfenamide-based, guanidine-based, thiazole-based, thiuram-based or dithiocarbamic acid-based accelerators (F2). Examples of Lewis base compounds include basic silica; primary, secondary and tertiary amines; organic acid salts of these amines, as well as adducts and salts thereof; aldehyde ammonia-based accelerators; and aldehyde amine-based accelerators. The vulcanization accelerator (F2) include sulfenamide-based accelerators, guanidine-based accelerators, thiazole-based accelerators, thiuram-based accelerators and dithiocarbamic acid-based accelerators, which can activate sulfur by, for example, ring-opening a cyclic sulfur when a sulfur atom of the respective vulcanization accelerators comes close thereto in the system to convert the sulfur into a transition state and thereby generating an active vulcanization accelerator-polyvulcanized product complex.

The Lewis base compound (F1) is not particularly restricted as long as it is a compound that is a Lewis base in the definition of Lewis acid-base and can donate an electron pair. Examples thereof include nitrogen-containing compounds having a lone electron pair on a nitrogen atom and, specifically, among those vulcanization accelerators known in the rubber industry, a basic one can be used.

Specifically, the above-described basic compound (F1) is, for example, an aliphatic primary, secondary or tertiary amine having 5 to 20 carbon atoms, examples of which include:

acyclic monoamines, such as alkylamines (e.g., n-hexylamine and octylamine), dialkylamines (e.g., dibutylamine and di(2-ethylhexyl)amine) and trialkylamines (e.g., tributylamine and trioctylamine), as well as derivatives and salts thereof;
acyclic polyamines, such as ethylene diamine, diethylene triamine, triethylene tetramine, tetraethylene pentamine, pentaethylene hexamine, hexamethylene diamine and polyethylene imine, as well as derivatives and salts thereof;
alicyclic polyamines such as cyclohexylamine, as well as derivatives and salts thereof;
aliphatic polyamines such as hexamethylene tetramine, as well as derivatives and salts thereof;
aromatic monoamines, such as aniline, alkylaniline, diphenylaniline, 1-naphthylaniline and *N*-phenyl-1-naphthylamine, as well as derivatives and salts thereof; and
aromatic polyamine compounds, such as phenylene diamine, diaminotoluene, *N*-alkylphenylene diamine, benzidine, guanidines and *n*-butylaldehyde aniline, as well as derivatives thereof.

Examples of the guanidines include 1,3-diphenylguanidine, 1,3-di-*o*-tolylguanidine, 1-*o*-tolylbiguanide, di-*o*-tolylguanidine salt of dicatechol borate, 1,3-di-*o*-cumenylguanidine, 1,3-di-o-biphenylguanidine, and 1,3-di-*o*-cumenyl-2-propionyl guanidine. Thereamong, 1,3-diphenylguanidine is preferred because of its high reactivity.

Examples of an organic acid that forms a salt with the above-described amines include carboxylic acid, carbamic acid, 2-mercaptobenzothiazole, and dithiophosphoric acid. Examples of a substance that forms an adduct with the above-described amines include alcohols and oximes. Specific examples of an organic acid salt or adduct of the amines include n-butylamine acetate, dibutylamine oleate, hexamethylenediamine carbamate, and dicyclohexylamine salt of 2-mercaptobenzothiazole.

Examples of a nitrogen-containing heterocyclic compound that shows basicity by having a lone electron pair on a nitrogen atom include:

monocyclic nitrogen-containing compounds, such as pyrazole, imidazole, pyrazoline, imidazoline, pyridine, pyrazine, pyrimidine, and triazine, as well as derivatives thereof; and
bicyclic nitrogen-containing compounds, such as benzimidazole, purine, quinoline, pteridin, acridine, quinoxaline, and phthalazine, as well as derivatives thereof.

Examples of a heterocyclic compound having a heteroatom other than a nitrogen atom include heterocyclic compounds containing nitrogen and other heteroatom, such as oxazoline and thiazoline, as well as derivatives thereof.

Examples of an alkali metal salt include basic inorganic metal compounds, such as formates, acetates, nitrates, carbonates, bicarbonates, oxides, hydroxides, and alkoxides of monovalent metals (e.g., lithium, sodium, and potassium), polyvalent metals (e.g., magnesium, calcium, zinc, copper, cobalt, manganese, lead, and iron) and the like.

Specific examples thereof include metal hydroxides, such as magnesium hydroxide, calcium hydroxide, sodium hydroxide, lithium hydroxide, potassium hydroxide, and copper hydroxide; metal oxides, such as magnesium oxide, calcium oxide, zinc oxide (zinc white), and copper oxide; and metal carbonates, such as magnesium carbonate, calcium carbonate, sodium carbonate, lithium carbonate, and potassium carbonate.

Thereamong, as an alkali metal salt, a metal hydroxide is preferred, and magnesium hydroxide is particularly preferred.

These metal salts are sometimes classified as vulcanization aids; however, in the present invention, they are classified as vulcanization accelerators.

Specific examples of the above-described other vulcanization accelerator (F2) include known vulcanization accelerators, such as thioureas, thiazoles, sulfenamides, thiurams, dithiocarbamates, and xanthates.

Examples of the thioureas include *N,N'*-diphenyl thiourea, trimethyl thiourea, *N,N'*-diethyl thiourea, *N,N'*-dimethyl thiourea, *N,N'*-dibutyl thiourea, ethylene thiourea, *N,N'*-diisopropyl thiourea, *N,N'*-dicyclohexyl thiourea, 1,3-di(*o*-tolyl)thiourea, 1,3-di(*p*-tolyl)thiourea, 1,1-diphenyl-2-thiourea, 2,5-dithiobiurea, guanyl thiourea, 1-(1-naphthyl)-2-thiourea, 1-phenyl-2-thiourea, *p*-tolyl thiourea, and *o*-tolyl thiourea. Thereamong, *N,N'*-diethyl thiourea, trimethyl thiourea, *N,N'*-diphenyl thiourea and *N,N'*-dimethyl thiourea are preferred because of their high reactivity.

Examples of the thiazoles include 2-mercaptobenzothiazole, di-2-benzothiazolyl disulfide, zinc salt of 2-mercaptobenzothiazole, cyclohexylamine salt of 2-mercaptobenzothiazole, 2-(*N,N*-diethylthiocarbamoylthio)benzothiazole, 2-(4'-morpholinodithio)benzothiazole, 4-methyl-2-mercaptobenzothiazole, di-(4-methyl-2-benzothiazolyl)disulfide, 5-chloro-2-mercaptobenzothiazole, sodium 2-mercaptobenzothiazole, 2-mercapto-6-nitrobenzothiazole, 2-mercapto-naphtho[1,2-*d*]thiazole, 2-mercapto-5-methoxybenzothiazole, and 6-amino-2-mercaptobenzothiazole. Thereamong, 2-mercaptobenzothiazole, di-2-benzothiazolyl disulfide, zinc salt of 2-mercaptobenzothiazole, cyclohexylamine salt of 2-mercaptobenzothiazole and 2-(4'-morpholinodithio)benzothiazole are preferred because of their high reactivity. Further, for example, di-2-benzothiazolyl disulfide and zinc salt of 2-mercaptobenzothiazole are particularly preferred since they are highly soluble even when added to a relatively nonpolar polymer and are, therefore, unlikely to induce a reduction in spinnability and the like caused by deterioration of the surface properties due to precipitation or the like.

Examples of the sulfenamides include *N*-cyclohexyl-2-benzothiazolyl sulfenamide, *N,N*-dicyclohexyl-2-benzothiazolyl sulfenamide, *N-tert*-butyl-2-benzothiazolyl sulfenamide, *N*-oxydiethylene-2-benzothiazolyl sulfenamide, *N*-methyl-2-benzothiazolyl sulfenamide, *N*-ethyl-2-benzothiazolyl sulfenamide, *N*-propyl-2-benzothiazolyl sulfenamide, *N*-butyl-2-benzothiazolyl sulfenamide, *N*-pentyl-2-benzothiazolyl sulfenamide, *N*-hexyl-2-benzothiazolyl sulfenamide, *N*-pentyl-2-benzothiazolyl sulfenamide, *N*-octyl-2-benzothiazolyl sulfenamide, *N*-2-ethylhexyl-2-benzothiazolyl sulfenamide, *N*-decyl-2-benzothiazolyl sulfenamide, *N*-dodecyl-2-benzothiazolyl sulfenamide, *N*-stearyl-2-benzothiazolyl sulfenamide, *N,N*-dimethyl-2-benzothiazolyl sulfenamide, *N,N*-diethyl-2-benzothiazolyl sulfenamide, *N,N*-dipropyl-2-benzothiazolyl sulfenamide, *N,N*-dibutyl-2-benzothiazolyl sulfenamide, *N,N*-dipentyl-2-benzothiazolyl sulfenamide, *N,N*-dihexyl-2-benzothiazolyl sulfenamide, *N,N*-dipentyl-2-benzothiazolyl sulfenamide, *N,N*-dioctyl-2-benzothiazolyl sulfenamide, *N,N*-di-2-ethylhexylbenzothiazolyl sulfenamide, *N*-decyl-2-benzothiazolyl sulfenamide, *N,N*-didodecyl-2-benzothiazolyl sulfenamide, and *N,N*-distearyl-2-benzothiazolyl sulfenamide. Thereamong, *N*-cyclohexyl-2-benzothiazolyl sulfenamide, *N-tert*-butyl-2-benzothiazolyl sulfenamide and *N*-oxydiethylene-2-benzothiazole sulfenamide are preferred because of their high reactivity. Further, for example, *N*-cyclohexyl-2-benzothiazolyl sulfenamide and *N*-oxydiethylene-2-benzothiazolyl sulfenamide are particularly preferred since they are highly soluble even when added to a relatively nonpolar polymer and are, therefore, unlikely to induce a reduction in spinnability and the like caused by deterioration of the surface properties due to precipitation or the like.

Examples of the thiurams include tetramethyl thiuram disulfide, tetraethyl thiuram disulfide, tetrapropyl thiuram disulfide, tetraisopropyl thiuram disulfide, tetrabutyl thiuram disulfide, tetrapentyl thiuram disulfide, tetrahexyl thiuram disulfide, tetraheptyl thiuram disulfide, tetraoctyl thiuram disulfide, tetranonyl thiuram disulfide, tetradecyl thiuram disulfide, tetradodecyl thiuram disulfide, tetrastearyl thiuram disulfide, tetrabenzyl thiuram disulfide, tetrakis(2-ethylhexyl) thiuram disulfide, tetramethyl thiuram monosulfide, tetraethyl thiuram monosulfide, tetrapropyl thiuram monosulfide, tetraisopropyl thiuram monosulfide, tetrabutyl thiuram monosulfide, tetrapentyl thiuram monosulfide, tetrahexyl thiuram monosulfide, tetraheptyl thiuram monosulfide, tetraoctyl thiuram monosulfide, tetranonyl thiuram monosulfide, tetradecyl thiuram monosulfide, tetradodecyl thiuram monosulfide, tetrastearyl thiuram monosulfide, tetrabenzyl thiuram monosulfide, and dipentamethylene thiuram tetrasulfide. Thereamong, tetramethyl thiuram disulfide, tetraethyl thiuram disulfide, tetrabutyl thiuram disulfide and tetrakis(2-ethylhexyl) thiuram disulfide are preferred because of their high reactivity. Further, in the case of a polymer that is relatively non-polar, an increase in the amount of an alkyl group contained in the accelerator compound tends to increase the solubility and, since a reduction in spinnability and the like caused by deterioration of the surface properties due to precipitation or the like are thus unlikely to occur, for example, tetrabutyl thiuram disulfide and tetrakis(2-ethylhexyl) thiuram disulfide are particularly preferred.

Examples of dithiocarbamates include zinc dimethyldithiocarbamate, zinc diethyldithiocarbamate, zinc dipropyldithiocarbamate, zinc diisopropyldithiocarbamate, zinc dibutyldithiocarbamate, zinc dipentyldithiocarbamate, zinc dihexyldithiocarbamate, zinc diheptyldithiocarbamate, zinc dioctyldithiocarbamate, zinc di(2-ethylhexyl)dithiocarbamate, zinc didecyldithiocarbamate, zinc didodecyldithiocarbamate, zinc *N*-pentamethylene dithiocarbamate, zinc *N*-ethyl-*N*-phenyldithiocarbamate, zinc dibenzyldithiocarbamate, copper dimethyldithiocarbamate, copper diethyldithiocarbamate, copper dipropyldithiocarbamate, copper diisopropyldithiocarbamate, copper dibutyldithiocarbamate, copper dipentyldithiocarbamate, copper dihexyldithiocarbamate, copper diheptyldithiocarbamate, copper dioctyldithiocarbamate, copper di(2-ethylhexyl)dithiocarbamate, copper didecyldithiocarbamate, copper didodecyldithiocarbamate, copper *N*-pentamethylene dithiocarbamate, copper dibenzyldithiocarbamate, sodium dimethyldithiocarbamate, sodium diethyldithiocarbamate, sodium dipropyldithiocarbamate, sodium diisopropyldithiocarbamate, sodium dibutyldithiocarbamate, sodium dipentyldithiocarbamate, sodium dihexyldithiocarbamate, sodium diheptyldithiocarbamate, sodium dioctyldithiocarbamate, sodium di(2-ethylhexyl)dithiocarbamate, sodium didecyldithiocarbamate, sodium didodecyldithiocarbamate, sodium *N*-pentamethylene dithiocarbamate, sodium dibenzyldithiocarbamate, ferric dimethyldithiocarbamate, ferric diethyldithiocarbamate, ferric dipropyldithiocarbamate, ferric diisopropyldithiocarbamate, ferric dibutyldithiocarbamate, ferric dipentyldithiocarbamate, ferric dihexyldithiocarbamate, ferric diheptyldithiocarbamate, ferric dioctyldithiocarbamate , ferric di(2-ethylhexyl)dithiocarbamate, ferric didecyldithiocarbamate, ferric didodecyldithiocarbamate, ferric *N*-pentamethylene dithiocarbamate, and ferric dibenzyldithiocarbamate.

Thereamong, zinc *N*-ethyl-*N*-phenyldithiocarbamate, zinc dimethyldithiocarbamate, zinc diethyldithiocarbamate and zinc dibutyldithiocarbamate are desirable because of their high reactivity. Further, in the case of a polymer that is relatively non-polar, an increase in the amount of an alkyl group contained in the accelerator compound tends to increase the solubility and, since a reduction in spinnability and the like caused by deterioration of the surface properties due to precipitation or the like are thus unlikely to occur, for example, zinc dibutyldithiocarbamate is particularly preferred.

Examples of xanthates include zinc methylxanthate, zinc ethylxanthate, zinc propylxanthate, zinc isopropylxanthate, zinc butylxanthate, zinc pentylxanthate, zinc hexylxanthate, zinc heptylxanthate, zinc octylxanthate, zinc 2-ethylhexylxanthate, zinc decylxanthate, zinc dodecylxanthate, potassium methylxanthate, potassium ethylxanthate, potassium propylxanthate, potassium isopropylxanthate, potassium butylxanthate, potassium pentylxanthate, potassium hexylxanthate, potassium heptylxanthate, potassium octylxanthate, potassium 2-ethylhexylxanthate, potassium decylxanthate, potassium dodecylxanthate, sodium methylxanthate, sodium ethylxanthate, sodium propylxanthate, sodium isopropylxanthate, sodium butylxanthate, sodium pentylxanthate, sodium hexylxanthate, sodium heptylxanthate, sodium octylxanthate, sodium 2-ethylhexylxanthate, sodium decylxanthate, and sodium dodecylxanthate. Thereamong, zinc isopropylxanthate is preferred because of its high reactivity.

The vulcanization accelerator (F) may be used in the form of being preliminarily dispersed in an inorganic filler, an oil, a polymer or the like and incorporated into the resin material (B) of the sheath portion of a rubber-reinforcing core-sheath fiber. Such vulcanization accelerators and retardants may be used individually, or in combination of two or more thereof.

The content of the vulcanization accelerator (F) in the resin material (B) can be 0.05 to 20 parts by mass, particularly 0.2 to 5 parts by mass, with respect to 100 parts by mass of the olefin-based copolymer composition (X). By controlling the content of the vulcanization accelerator (F) in the above-described range, the effect of improving the adhesion between the resin material (B) and a rubber can be favorably attained.

In the low-melting-point resin material (B), for the purpose of, for example, improving the adhesion at the interface with an adherend rubber composition, a thermoplastic rubber cross-linked with a polypropylene-based copolymer (TPV), any of "other thermoplastic elastomers (TPZ)" in the classification of thermoplastic elastomers described in JIS K6418, or the like may be incorporated in addition to the above-described block copolymer composed of a soft segment and a hard segment. These components enable to finely disperse a partially or highly cross-linked rubber into a continuous phase of the matrix of a low-melting-point thermoplastic resin composition. Examples of the cross-linked thermoplastic rubber include acrylonitrile-butadiene rubbers, natural rubbers, epoxidized natural rubbers, butyl rubbers, and ethylene-propylene-diene rubbers. Examples of the "other thermoplastic elastomers (TPZ)" include syndiotactic-1,2-polybutadiene resins and *trans*-polyisoprene resins.

It is also preferred to incorporate a filler (N) into the resin material (B). Examples of the filler (N) include inorganic particulate carriers, such as carbon black, alumina, silica alumina, magnesium chloride, calcium carbonate and talc, as well as smectite group, vermiculite group and mica group, such as montmorillonite, sauconite, beidellite, nontronite, saponite, hectorite, stevensite, bentonite and taeniolite; and porous organic carriers, such as polypropylenes, polyethylenes, polystyrenes, styrene-divinylbenzene copolymers, and acrylic acid-based copolymers. These fillers can be incorporated for reinforcement of the sheath portion when, for example, the sheath portion does not have sufficient fracture resistance and a crack is thus generated in the sheath portion to cause fracture during fusion of the sheath portion with an adherend rubber.

One preferred example of the filler (N) is a carbon black. By adding a carbon black as a filler to the resin material (B) of the sheath portion, electrical conductivity can be imparted to the resin material (B) by the carbon black, and the resulting cord can be colored in black.

As the carbon black of the present invention, one which has a nitrogen adsorption specific surface area in a range of 20 to 150 $m^2$/g as determined in accordance with JIS K6217, an iodine adsorption amount in a range of 15 to 160 mg/g as determined in accordance with JIS K6221 and a DBP oil adsorption amount in a range of 25 to 180 $cm^3$/100 g as determined in accordance with JIS K6221 (Method A) can be used, and the carbon black is preferably one which has a nitrogen adsorption specific surface area in a range of 70 to 142 $m^2$/g, an iodine adsorption amount in a range of 50 to 139 mg/g and a DBP oil absorption amount (Method A) in a range of 70 to 140 $cm^3$/100 g.

The average particle size of the carbon black of the present invention is preferably in a range of 10 to 70 nm, more preferably in a range of 10 to 25 nm. A general-purpose carbon black which has not only a relatively small particle size and thus good dispersibility but also a large specific surface area of nitrogen adsorption and a high iodine adsorption amount and exhibits good surface properties for adsorption of a polymer to pores is preferred. Particularly preferred examples of the carbon black of the present invention include furnace blacks, such as SAF carbon black, SAF-HS carbon black, ISAF carbon black, ISAF-HS carbon black and ISAF-LS carbon black, and these carbon blacks can be used individually, or in combination of two or more thereof.

The carbon black(s) can be incorporated in an amount of preferably 0.1 to 100 parts by mass, particularly preferably 1 to 30 parts by mass, with respect to 100 parts by mass of the olefin-based copolymer composition (X) contained in the resin material (B) of the sheath portion. It is preferred to incorporate the carbon black(s) in an amount of 0.1 parts by mass or greater since the cord of the present invention is thereby colored in black and the color agrees with the black rubber of a tire or the like, so that no unevenness in color is generated by exposure of the cord or the like. It is also preferred to incorporate the carbon black(s) in an amount of 1 part by mass or greater since a polymer-reinforcing effect by the carbon black(s) can be attained. Meanwhile, when the amount of the carbon black(s) is greater than 30 parts by mass, the carbon black-containing resin is hardly fluidized at the time of melting, so that fiber breakage may occur during spinning. Further, when the amount of the carbon black(s) is greater than 100 parts by mass, since the polymer is unlikely to be stretched in the fiber formation at the time of fiber spinning, the surface of the resin material of the sheath portion is likely to be uneven.

In the above-described high-melting-point resin (A) and resin material (B), in order to add other properties such as oxidation resistance, an additive(s) normally added to a resin can also be incorporated within a range that does not markedly impair the effects of the present invention and the working efficiency in spinning and the like. As such additional components, conventionally known various additives that are used as additives for polyolefin resins, such as a nucleating agent, an antioxidant, a neutralizer, a light stabilizer, an ultraviolet absorber, a lubricant, an antistatic agent, a metal deactivator, a peroxide, an anti-microbial fungicide and a fluorescence whitener, and other additives can be used.

Specific examples of the additives include, as nucleating agents, sodium 2,2-methylene-bis (4,6-di-*t*-butylphenyl)phosphate, talc, sorbitol compounds such as 1,3,2,4-di(*p*-methylbenzylidene)sorbitol, and aluminum hydroxy-di(*t*-butylbenzoate).

Examples of the antioxidant include phenolic antioxidants, such as tris-(3,5-di-*t*-butyl-4-hydroxybenzyl)isocyanurate, 1,1,3-tris(2-methyl-4-hydroxy-5-*t*-butylphenyl)butane, octadecyl-3-(3,5-di-*t*-butyl-4-hydroxyphenyl)propionate, pentaerythrityl-tetrakis{3-(3,5-di-*t*-butyl-4-hydroxyphenyl)propionate}, 1,3,5-trimethyl-2,4,6-tris(3,5-di-*t*-butyl-4-hydroxybenzyl)benzene, 3,9-bis[2-{3-(3-*t*-butyl-4-hydroxy-5-methylphenyl)propionyloxy}-1,1-dimethylethyl]-2,4,8,1 0-tetraoxaspiro[5,5]undecane, and 1,3,5-tris(4-*t*-butyl-3-hydroxy-2,6-dimethylbenzyl)isocyanuric acid.

Examples of a phosphorus-based antioxidant include tris(mixed-, mono-, or di-nonylphenyl phosphite), tris(2,4-di-*t*-butylphenyl)phosphite, 4,4'-butylidene-bis(3-methyl-6-*t*-butylphenyl-di-tridecyl)phosphite, 1,1,3-tris(2-methyl-4-di-tridecylphosphite-5-*t*-butylphenyl)butane, bis(2,4-di-*t*-butylphenyl)pentaerythritol diphosphite, tetrakis(2,4-di-*t*-butylphenyl)-4,4'-biphenylene diphosphonite, tetrakis(2,4-di-*t*-butyl-5-methylphenyl)-4,4'-biphenylene diphosphonite, and bis(2,6-di-*t*-butyl-4-methylphenyl)pentaerythritol diphosphite. Examples of a sulfur-based antioxidant include distearyl thiodipropionate, dimyristyl thiodipropionate, and pentaerythritol tetrakis(3-lauryl thiopropionate).

Examples of the neutralizer include calcium stearate, zinc stearate, and hydrotalcite.

Examples of a hindered amine-based stabilizer include polycondensates of dimethyl succinate and 1-(2-hydroxyethyl)-4-hydroxy-2,2,6,6-tetramethylpiperidine, tetrakis(1,2,2,6,6-pentamethyl-4-piperidyl)-1,2,3,4-butane tetracarboxylate, bis(1,2,2,6,6-pentamethyl-4-piperidyl)sebacate, *N,N*-bis(3-aminopropyl)ethylenediamine-2,4-bis{*N*-butyl-*N*-(1,2,2,6,6-pentamethyl-4-piperid yl)amino}-6-chloro-1,3,5-triazine condensate, bis(2,2,6,6-tetramethyl-4-piperidyl)sebacate, poly[{6-(1,1,3,3-tetramethylbutyl)imino-1,3,5-triazine-2,4-diyl}{(2,2,6,6-tetramethyl-4-piperi dyl)imino}hexamethylene{2,2,6,6-tetramethyl-4-piperidyl}imino], and poly[(6-morpholino-*s*-triazine-2,4-diyl)[(2,2,6,6-tetramethyl-4-piperidyl)imino]hexamethylen e{(2,2,6,6-tetramethyl-4-piperidyl)imino}].

Examples of the lubricant include stearic acid; higher fatty acid amides, such as oleic acid amide, stearic acid amide, behenic acid amide, and ethylene bis-stearylamide; silicone oil; higher fatty acid esters; and metallic soaps, such as magnesium stearate, calcium stearate, zinc stearate, magnesium 12-hydroxystearate, calcium 12-hydroxystearate, zinc 12-hydroxystearate, magnesium arachidate, calcium arachidate, zinc arachidate, magnesium behenate, calcium behenate, zinc behenate, magnesium lignocerate, calcium lignocerate, zinc lignocerate, among which magnesium stearate, calcium stearate, zinc stearate, magnesium arachidate, calcium arachidate, zinc arachidate, magnesium behenate, calcium behenate, zinc behenate, magnesium lignocerate, calcium lignocerate, and zinc lignocerate are particularly preferred.

Examples of the antistatic agent include higher fatty acid glycerol esters, alkyl diethanolamines, alkyl diethanolamides, and alkyl diethanolamide fatty acid monoesters.

Examples of the ultraviolet absorber include 2-hydroxy-4-*n*-octoxybenzophenone, 2-(2'-hydroxy-3',5'-di-*t*-butylphenyl)-5-chlorobenzotriazole, and 2-(2'-hydroxy-3'-*t*-butyl-5'-methylphenyl)-5-chlorobenzotriazole.

Examples of the light stabilizer include *n*-hexadecyl-3,5-di-*t*-butyl-4-hydroxybenzoate, 2,4-di-*t*-butylphenyl-3',5'-di-*t*-butyl-4'-hydroxybenzoate, bis(2,2,6,6-tetramethyl-4-piperidyl)sebacate, dimethyl succinate-2-(4-hydroxy-2,2,6,6-tetramethyl-1-piperidyl)ethanol condensate, poly{6-[(1,1,3,3-tetramethylbutyl)amino]-1,3,5-triazine-2,4-diyl][(2,2,6,6-tetramethyl-4-pipe ridyl)imino]hexamethylene[(2,2,6,6-tetramethyl-4-piperidyl)imino] }, and *N,N'*-bis(3-aminopropyl)ethylenediamine-2,4-bis[*N*-butyl-*N*-(1,2,2,6,6-pentamethyl-4-piperid yl)amino]-6-chloro-1,3,5-triazine condensate.

Particularly, from the standpoint of the combination of the core portion and the sheath portion, it is preferred to use a high-melting-point polyolefin resin for the core portion as the same olefin resin as that of the sheath portion since good compatibility is thereby attained between the core portion and the sheath portion. By using an olefin resin for both the core portion and the sheath portion, since a high bonding strength is attained at the resulting core-sheath polymer interface and sufficient peeling resistance is provided against interfacial peeling between the core portion and the sheath portion, which are different from those cases where different kinds of resins are used for the core portion and the sheath portion, the resultant can sufficiently exhibit properties as a composite fiber over a long period of time. Specifically, it is preferred to use a crystalline propylene homopolymer having a melting point of 150°C or higher as the high-melting-point resin (A) of the core portion and to use a polypropylene-based copolymer resin obtained by copolymerization of a polypropylene and a component copolymerizable with the polypropylene, such as an ethylene-propylene copolymer or an ethylene-butene-propylene ternary copolymer, particularly an ethylene-propylene random copolymer, as the low-melting-point resin material (B) of the sheath portion. The high-melting-point polyolefin resin of the core portion is particularly preferably an isotactic polypropylene since it provides good fiber-forming properties and the like in spinning.

In this case, the melt flow rate (MFR) of the high-melting point polyolefin resin (MFR1) and the melt flow rate of the low-melting-point polyolefin resin (MFR2) are not particularly restricted as long as they are in a range where these resins can be spun; however, the melt flow indices are preferably 0.3 to 100 g/10 min. The same applies to the melt flow rate of the high-melting-point resin (A) used in the core portion other than the high-melting point polyolefin resin.

Particularly, the melt flow rate of the high-melting-point resin (A) (MFR1) including the high-melting point polyolefin resin can be selected to be in a range of preferably 0.3 to 15 g/10 min, particularly preferably 0.5 to 10 g/10 min, more preferably 1 to 5 g/10 min. The reason for this is because, with the MFR of the high-melting-point resin being in the above-described range, favorable spinning take-up and stretching properties are attained, and a melt of the high-melting-point resin of the core portion does not flow under heating of the vulcanization process in the production of a rubber article, so that the resultant can maintain a cord form.

The melt flow rate of the low-melting-point resin material (B) (MFR2) is preferably 3 g/10 min or higher, particularly preferably 5 to 70 g/10 min, more preferably 5 to 30 g/10 min. In order to improve the thermal fusibility of the resin material (B) of the sheath portion, a resin having a high MFR is preferably used since such a resin is likely to flow into and fill a gap with an adherend rubber. On the other hand, in cases where other reinforcing member (e.g., a ply cord or a bead core) is provided in the vicinity of where the composite fibers are arranged and when the rubber covering the composite fibers has an unintended void, an excessively high MFR may cause the molten resin material (B) to wet-spread on the surface of the fiber material of the ply cord or the bead core; therefore, the MFR is particularly preferably not higher than 70 g/10 min. The MFR is more preferably not higher than 30 g/10 min since, in this case, when the composite fibers are in contact with each other, such a phenomenon of fiber-fiber fusion in which the molten resin material (B) wet-spreads and forms aggregated fiber conjugates is less likely to occur. Further, an MFR of not higher than 20 g/10 min is still more preferred since it improves the fracture resistance of the resin of the sheath portion at the time of peeling the fused rubber, and the sheath portion is thus strongly adhered with the rubber.

MFR values (g/10 min) are determined in accordance with JIS K7210, and the MFR of a polypropylene-based resin material and that of a polyethylene-based resin material are measured at a temperature of 230°C under a load of 21.18 N (2,160 g) and at a temperature of 190°C under a load of 21.18 N (2,160 g), respectively.

With regard to the ratio of the core portion and the sheath portion in the composite fiber of the present invention, the ratio of the core portion in the composite fiber is preferably 10 to 95% by mass, more preferably 30 to 80% by mass. When the ratio of the core portion is excessively low, the strength of the composite fiber is reduced, so that sufficient reinforcing performance may not be attained. The ratio of the core portion is particularly preferably 50% by mass or higher since the reinforcing performance can be enhanced. However, when the ratio of the core portion is excessively high, the core portion is likely to be exposed from the composite fiber due to an excessively low ratio of the sheath portion, and sufficient adhesion with a rubber may thus not be attained.

As for the method of producing the composite fiber (monofilament) of the present invention, the composite fiber can be produced by a wet-heating and stretching method using two uniaxial extruders for the core material and the sheath material, along with a core-sheath type composite spinneret. The spinning temperature can be set at 140°C to 330°C, preferably 160 to 220°C, for the sheath component; and at 200 to 330°C, preferably 210°C to 300°C, for the core component. Wet-heating can be carried out using, for example, a wet-heating apparatus at 100°C, or a hot water bath at 95 to 100°C, preferably at 95 to 98°C. From the standpoint of thermal fusibility, it is not preferred to cool the resultant once and then perform re-heating and stretching, since crystallization of the sheath portion is thereby facilitated. The stretching ratio is preferably 1.5 or higher from the standpoint of crystallization of the core portion.

The fineness, namely the fiber thickness, of the reinforcing material composed of the rubber-reinforcing fiber of the present invention is preferably in a range of 100 dtex to 5,000 dtex. When the fiber thickness of the reinforcing material is less than 100 dtex, the strength is reduced, and the resulting cord is thus likely to be broken. Particularly, in the case of a tire, in order to inhibit cord breakage during the processings of various steps in the production of the tire, the fiber thickness of the reinforcing material is more preferably not less than 500 dtex. The upper limit of the fiber thickness of the reinforcing material is not particularly defined as long as the reinforcing material can be arranged in the members of a rubber article such as a tire; however, it is preferably 5,000 dtex or less, particularly preferably 4,000 dtex or less. The reason for this is because, in the case of a monofilament cord, not only a large fiber thickness leads to a lower spinning speed at the time of spinning and the economic efficiency in the processing is thus deteriorated, but also it is difficult to bend a thread having a large thickness at the time of winding the thread around a winding tool such as a bobbin and this deteriorates the working efficiency. In the present invention, the "fiber thickness" means a fiber size (in accordance with JIS L0101) which is determined for a monofilament itself in the case of a monofilament, or for a cord formed by bundling monofilaments together in the case of bundled monofilaments.

Further, one of the characteristic features of the monofilament cord of the present invention is that it is highly adhesive with a rubber even when the reinforcing material has a single fiber thickness of 50 dtex or greater. When the fiber thickness of the reinforcing material is less than 50 dtex, a problem in adhesion with a rubber is unlikely to occur even when the fibers are not adhered by an adhesive composition or through fusion between the fiber resin and a rubber. The reason for this is because, since a small single fiber diameter makes the cord-cutting stress smaller than the force that causes peeling of the adhered parts, the cord is broken before the cord and a rubber are detached at their interface when the adhesiveness is evaluated by peeling or the like. This phenomenon is also called "fluff adhesion" and can be observed at a single fiber thickness of less than 50 dtex, which is equivalent to the fluff thickness.

Therefore, even when there is no problem for a cord, a nonwoven fabric, a reinforcing material or the like that has a monofilament diameter of less than 50 dtex, a single fiber thickness of 50 dtex or greater, without adhesion provided by an adhesive composition or fusion between the fiber resin and a rubber, presents a problem in adhesion between a rubber and the reinforcing material. The monofilament of the present invention is characterized in that it is highly adhesive with a rubber and its cord end is fusible even when the reinforcing material has a single fiber thickness of 50 dtex or greater.

The rubber-fiber composite of the present invention is obtained by coating a reinforcing material composed of the above-described rubber-reinforcing fiber with a rubber. As a coating rubber used in the rubber-fiber composite of the present invention, a rubber species that is suitable for the rubber article to be reinforced and the site to which the coating rubber is to be applied can be selected as appropriate, and the coating rubber is not particularly restricted. The coating rubber is preferably a diene-containing rubber composition such as a diene-based rubber, particularly preferably such a rubber composition further containing a sulfur-based vulcanization agent. Examples of the diene-based rubber include natural rubbers, isoprene rubbers, butadiene rubbers, styrene-butadiene rubbers and chloroprene rubbers, and a rubber composition containing a natural rubber or butadiene rubber is preferred.

Further, by incorporating the styrene-based elastomer (E) containing a styrene block into the olefin-based random polymer or olefin-based homopolymer of the resin material (B) of the sheath portion, the compatibility with a diene-based rubber containing a styrene component is improved; therefore, the adhesiveness can be enhanced with a rubber composition containing a styrene-butadiene rubber.

The length of the reinforcing material composed of the composite fiber is preferably 10 mm or greater, and the longer the reinforcing material, the more preferred it is. When the length of the reinforcing material composed of the composite fiber is less than 10 mm, since integration of the reinforcing material with a rubber requires to employ a method of, for example, kneading the reinforcing material into the rubber and extruding the resultant, it is thus difficult to orient the reinforcing material in a single direction and to rubber-coat the reinforcing material. Further, the difference between a short fiber and a long fiber corresponds to the difference in whether the fiber end acts as a free end or as a fixed end. The longer the fiber, the further can the tension-bearing capacity, which is a characteristic feature of long fibers, be improved; therefore, by appropriately arranging the rubber-fiber composite, the desired performance is more likely to be attained in a rubber article such as a tire.

In the present invention, the mode of a fiber assembly formed by the reinforcing material of the core-sheath composite fiber is not particularly restricted; however, it is preferably a monofilament or a cord in which 10 or less monofilaments are bundled, more preferably a monofilament cord. The reason for this is because, if the assembly of the core-sheath fibers of the present invention is in the fiber form of a cord in which more than 10 monofilaments are bundled, a twisted cord, a nonwoven fabric or a textile, since the low-melting-point polyolefin resin constituting the sheath portion is melted when the fiber assembly is vulcanized in a rubber, the filaments are fused with each other and the resulting molten bodies permeate each other, whereby an aggregated foreign material may be formed in a rubber article. When such a foreign material is generated, a crack may develop from the aggregated foreign material in the rubber article due to strain generated by rolling as in the use of a tire, and this may cause separation. Accordingly, when the core-sheath fibers form a fiber assembly in a rubber article, since the greater the number of bundled filaments, the less likely the rubber permeate between the resulting cords and the more likely an aggregated foreign material is formed, the industrial use of such a rubber article practically has a problem in durability; therefore, in a fiber structure of a twisted cord, a nonwoven fabric or a textile, it is generally preferred that the number of bundled filaments in a cord be 10 or less.

Further, for the same reason as described above, with regard to the fiber arrangement in a rubber article, it is preferred that monofilament cords of the core-sheath composite fiber do not substantially intersect with each other in the composite, that is, a smaller number of contact points between the monofilament cords is more preferred. Moreover, when the cords are arranged in a paralleled manner, since melting of the resin of the sheath portion resin and thus infiltration of plural cords with each other are inhibited, a rubber article can be reinforced without any morphological change such as formation of a fiber aggregate, which is preferred. When arranging the core-sheath composite fiber of the present invention in a rubber article, it is preferred to prevent the core-sheath composite fiber from coming into contact with the adhesive-treated surface of other cord, and it is more preferred to incorporate a rubber between the adhesive-treated cord and the core-sheath composite fiber. The reason for this is because, even at the melt flow index of the low-melting-point olefin-based polymer of the present invention, when a melt of the molten polymer wet-spreads on the adhesive-treated surface of other cord, the melt is incorporated into a gap between the adhesive-treated cord and a rubber, and this causes a problem that adhesion of the adhesive-treated cord surface with the rubber is inhibited. Therefore, when the rubber article is a pneumatic tire, it is preferred to adopt an arrangement in which, for example, a rubber is incorporated between the core-sheath composite fiber of the present invention and cords having an adhesive-treated surface, such as carcass plys, belts and beads, and the outer periphery of these cords having an adhesive-treated surface and the core-sheath composite fiber of the present invention are thereby prevented from coming into contact with each other.

In the present invention, the reinforcing material composed of the core-sheath fiber can be coated with a rubber in a state of being oriented in a single direction. By using the reinforcing material composed of the core-sheath fiber in a state of being oriented in a single direction, a tension applied to a rubber can be taken up by the reinforcing material; therefore, when the reinforcing material is used for a tire reinforcement application, for example, an effect of improving the cut resistance and an effect of dispersing the stress in the tire can be obtained, which is preferred. In this manner, by taking advantage of anisotropy that is an intrinsic property of fibers to allow the reinforcing material to bear the tension, the strength in the fiber axis direction can be utilized to reduce the amount of the rubber to be used, and this consequently enables to attain an effect of improving the tire fuel efficiency through a reduction in tire weight.

The end count of the reinforcing material in the composite of the present invention is preferably 5 to 75 per a width of 50 mm. When the end count is excessively small, a sufficient reinforcing effect may not be obtained, whereas an excessively high end count may lead to an increase in weight, neither of which cases is preferred. The composite of the present invention may be arranged in a single layer or in two or more layers at each part to be reinforced as long as it does not cause a problem in the production of a rubber article to be reinforced, and the number of layers to be arranged is not particularly restricted.

As described above, the rubber-fiber composite of the present invention can be suitably used for reinforcement of various rubber articles such as tires, and is capable of achieving the desired reinforcing performance while inhibiting an increase in the rubber article thickness. Particularly, when the composite of the present invention is used for reinforcement of a tire, the composite of the present invention is more useful as an insert, a flipper, a chipper, a chafer (canvas chafer) member or the like, which is used together with a skeletal material in order to improve the tire driving stability and the like through suppression of tire vibration/noise, improvement of the cut resistance or enhancement of the effect of reducing strain during tire deformation, than as a skeletal material which maintains the tire internal pressure and is thus responsible for the strength of the tire.

The post-vulcanization tensile strength at break of the reinforcing material in the rubber-fiber composite of the present invention is preferably not less than 29 N/mm$^2$, more preferably not less than 40 N/mm$^2$, still more preferably not less than 90 N/mm$^2$, particularly preferably not less than 150 N/mm$^2$, and the higher the tensile strength at break, the more preferred it is. In the composite fiber of the present invention, although the sheath portion fuses with a rubber and is thus thermally deformed at a vulcanization temperature when the rubber is processed, the core portion is hardly thermally deformed and is thus not melted and broken in the fiber axis direction of the composite fiber. Accordingly, since the resin portion is continuously provided along the fiber axis direction, a strength of not less than 29 N/mm$^2$, which is higher than the rubber breaking strength, can be attained. This consequently makes the composite an anisotropic material that has a sufficient rubber breaking strength in the fiber axis direction; therefore, a rubber article in which this composite is arranged can attain a function of, for example, bearing strain in a such a specific direction. When the tensile strength at break of the reinforcing material is less than 29 N/mm$^2$, sufficient reinforcing performance may not be obtained in the rubber article after vulcanization. The rubber-fiber composite of the present invention is capable of exhibiting sufficient reinforcing performance even when it is vulcanized at an ordinary vulcanization temperature of 150°C to 200°C after being arranged in a desired part of a rubber article to be reinforced. Therefore, as a reinforcing material of a rubber article such as a tire, the rubber-fiber composite of the present invention can exhibit sufficient reinforcing performance in the applications for, for example, reinforcement of bead portions and side wall portions, such as an insert, a flipper, a chipper and a chafer as described above, as well as reinforcement of a tread portion such as a crown portion-reinforcing layer.

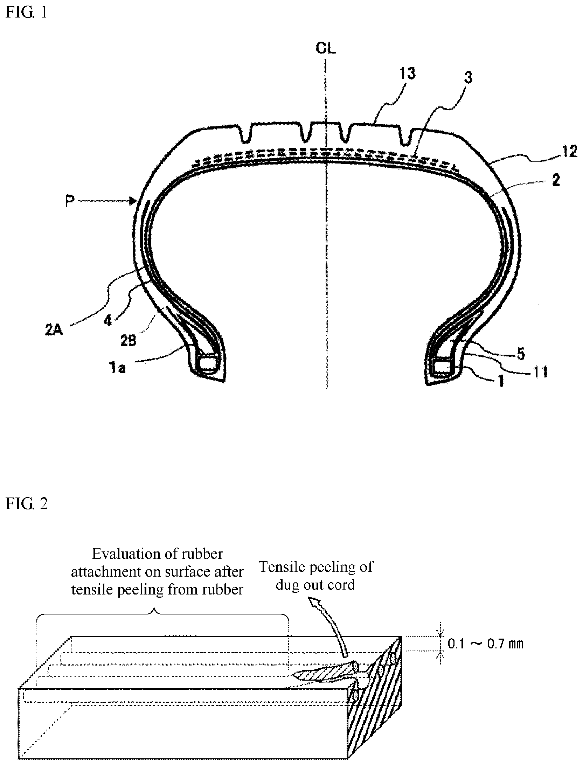

FIG. 1 is a schematic cross-sectional view that illustrates one example of the pneumatic tire of the present invention. The illustrated tire comprises: a pair of bead portions 11; a pair of side wall portions 12, which continuously extend on the tire radial-direction outer side from the respective bead portions 11; and a tread portion 13 which extends between the pair of the side wall portions 12 and forms a ground-contacting portion. The illustrated tire has, as its skeleton, a carcass layer 2 which is composed of at least one carcass ply that toroidally extends between bead cores 1 each embedded in the pair of the bead portions 11, and further comprises a belt layer 3 which is arranged on the tire radial-direction outer side of the carcass layer 2 in the crown portion and composed of at least two belts. In addition, although not illustrated in the drawing, an inner liner is arranged on the tire radial-direction inner side of the carcass layer 2. The reference numeral 5 in FIG. 1 represents a bead filler.

The pneumatic tire of the present invention comprises a reinforcing layer composed of the above-described rubber-fiber composite of the present invention, and this allows the pneumatic tire of the present invention to have superior durability than conventional tires. In the tire of the present invention, the arrangement position of the reinforcing layer is not particularly restricted and, for example, as illustrated, a reinforcing layer 4 composed of the composite of the present invention can be arranged in at least a part of the bead portions 11 and the side wall portions 12. By arranging the reinforcing layer 4 in the bead portions 11 and the side wall portions 12, the generation of vibration in the tire side portion is inhibited, so that the generation of noise during traveling can be suppressed. In a tire during traveling, the larger the amplitude of the tire wall vibration, the larger is the air vibration, i.e., the traveling noise generated on the tire side surface; however, by arranging the reinforcing layer 4, since vibration of the tire side surface can be suppressed due to the tensile force of the composite fiber, the sound generated from the tire side surface is reduced, whereby the noise such as pass-by noise can be reduced. In addition, since the reinforcing layer 4 composed of the composite of the present invention is thinner than a conventional reinforcing layer constituted by a rubberized cord layer, there is no disadvantage associated with an increase in the thickness of the side portion. Further, since the tire side portion has a temperature of up to about 60°C during normal tire traveling, the composite of the present invention can be applied to a rubber article such as a tire as long as the melting point of a low-melting-point polyolefin-based polymer in the sheath portion is 80°C or higher. Moreover, during high-strain traveling (e.g., traveling with a flat tire) when the tire bears a temperature of about 110°C, as long as the melting point of the low-melting-point olefin-based polymer in the sheath portion of the present invention is 120°C or higher, since this melting point is equivalent to the softening point of an adhesive composition that is composed of resorcin, formalin and latex and conventionally used for adhesion treatment of the tire cord surface, it is believed to be possible to ensure thermal durability in the general market where tire cords are conventionally used; therefore, the composite of the present invention can be used as a cord member for reinforcement of an ordinary tire even under severe temperature conditions during traveling that are demanded on the market, which is particularly preferred. The melting point is more preferably 135°C or higher since it makes it possible to apply the composite of the present invention to racing tires and the like in which more stringent durability is required under high-strain and high-temperature conditions than in those tires on the general market.

In the present invention, the reinforcing layer 4 may be arranged in at least a part of the bead portions 11 and the side wall portions 12, and this enables to obtain the expected effects of the present invention by modifying the displacement and the strain distribution during tire rolling with a tension born by the composite fiber in the reinforcing layer 4. Preferably, the reinforcing layer 4 is arranged between the bead filler 5 and a main body 2A of the carcass ply extending between the pair of the bead portions 11 in a region from a tire radial-direction outer end 1a of the bead core 1 to a position P located on the tire shoulder side than the tire maximum width position. Such arrangement of the reinforcing layer 4 in this region is most effective for reduction of noise during traveling and improvement of the tire driving stability.

When the distance from the lower end of the bead core 1 to the upper end of the belt layer 3 in the tread portion is defined as the tire cross-sectional height in a state where the tire is mounted on an application rim, inflated to a prescribed internal pressure and subjected to a prescribed load, the position P can be located at a position of 65% to 85% of the tire cross-sectional height. The term "application rim" used herein refers to a rim defined by an industrial standard that is valid in each region where the tire is manufactured and used, such as JATMA (Japan Automobile Tyre Manufacturers Association) Year Book in Japan, ETRTO (European Tyre and Rim Technical Organisation) Standard Manual in Europe, or TRA (The Tire and Rim Association Inc.) Year Book in the U.S.; the term "prescribed internal pressure" refers to an inner pressure (maximum air pressure) that corresponds to the tire maximum load capacity defined by a standard of JATMA or the like for a tire of an application size mounted on an application rim; and the term "prescribed load" refers to the maximum mass that is allowable on the tire according to the above-described standard.

In the present invention, since the cut surface of the cord end is fused with a rubber at the respective ends of the reinforcing layer 4, there is no restriction associated with crack development from a non-adhered part between the cord end and the rubber due to strain, so that the reinforcing layer 4 can be arranged in a tire portion that is subjected to high strain, which was difficult in the past. Examples of the arrangement of members in such a tire include a case where one end of the reinforcing layer 4 can be arranged at the position P on the tire shoulder side than a tire width-direction end 2B of the carcass ply. Under high-internal pressure and high-load tire traveling conditions, when a conventional cord material having non-adhered ends are laminated on an insert member or the like of the reinforcing layer 4 at such a position, the reinforcing layer 4 and the carcass ply form intersecting layers having different cord lengthwise directions between the layers. In cases where the reinforcing layer 4 is arranged in such a manner to constitute a layer intersecting with the carcass ply in this manner, since cracks are developed from the end surface of the non-adhered part of the reinforcing layer 4 when strain stress such as shear deformation is repeatedly input between the carcass ply and the intersecting reinforcing layer 4 in association with traveling, the durability cannot be increased in the region from the tire side to the respective bead portions. Thus, in the market, except for those tires having such a special structure that is reinforced with a rubber or other member to inhibit crack development from the end surface of non-adhered part, hardly any tire having the ends of the reinforcing layer 4 in the same region has been put into practical use. Concerns associated with a crack on the end surface of non-adhered part at the cord end are not limited to such a tire structure; therefore, in pneumatic tires that are increasingly reduced in weight toward the future, it is particularly desired that such ends be tightly adhered.

In the present invention, the reinforcing layer 4 may be arranged such that the fiber axis direction of the reinforcing material is aligned with any direction; however, particularly, the reinforcing layer 4 is preferably arranged such that the orientation direction of the reinforcing material is substantially the same as the tire circumferential direction, or such that the orientation direction of the reinforcing material is substantially at an angle of 30° to 90° with respect to the tire radial direction. As for the noise reduction effect and the driving stability-improving effect, high effects can be obtained since vibration of the tire side portion in the tire transverse direction can be suppressed by the tensile force of the reinforcing material regardless of whether the orientation direction of the reinforcing material is aligned with the tire circumferential direction or at an angle of 30° to 90° with respect to the tire radial direction; however, comparing these cases, higher effects are obtained when the orientation direction of the reinforcing material is aligned with the tire circumferential direction. The reason for this is believed to be because, since the carcass ply cords of a tire are arranged along the tire radial direction, for inhibition of displacement caused by an increase in the gaps between the carcass ply cords, it is more effective to align the orientation direction of the reinforcing material with the tire circumferential direction. Therefore, as long as there is no problem in workability and the like in the production, the angle at which a member is arranged is preferably 30° or larger with respect to the tire radial direction since a high effect of inhibiting displacement caused by an increase in the gaps between the carcass ply cords is attained, and the angle at which a member is arranged is particularly preferably 45° or larger, more preferably 90°, with respect to the tire radial direction.

The larger the angle of a tire cord with respect to the tire radial direction, the higher becomes the melting temperature of the tire cord at a high temperature, and this is preferred since the heat resistance of the tire is improved. The reason for this is because, since the melting point of a substance is represented by a formula "$Tm = \Delta Hm/\Delta Sm$" as described above, compression in the cord direction disturbs the orientation along the cord direction and thus lowers the melting point due to an increase in $\Delta Sm$, while application of a tension leads to an increase in the melting point. Although a cord in a tire having an internal pressure is subjected to a tensile force, the cord in the vicinity of the tire tread surface is compressed in the tire radial direction when the tire is fitted to a vehicle. However, the closer the cord arrangement to 90° with respect to the tire radial direction, the smaller becomes the compressive input; therefore, a tensile force is more likely to applied to the tire cord, and the actual melting temperature of the cord is consequently increased.

With regard to improvement of the driving stability, in a tire structure composed of an air film that is supported by a tension applied thereto by an internal pressure generated as a result of inflating a rubber layer composed of a carcass ply toroidally extending between bead cores, it is expected that the parallel arrangement of carcass ply cords reinforcing the regions from the respective bead portions to the tread portion is less disturbed when displacement, in which the gaps between the carcass ply cords are increased in the tire side portions due to a change in irregularity along the film anti-plane direction, buckling or the like, is suppressed and thus small. When such disturbance in the parallel arrangement of the cords is reduced, a situation in which the stress is unlikely to be transmitted due to disturbance in the parallel arrangement of the carcass ply cords is further improved in the process where the steering force or the like generated by vehicle steering transmits stress from the wheel through the carcass ply to the tire tread portion that is in contact with the ground; therefore, transmission of operation-related stress (e.g., steering force) along the film in-plane direction is expected to be improved, and the driving stability (e.g., steering response) is believed to be thereby enhanced. Further, as for the effect of suppressing the displacement in which the gaps between the carcass ply cords are increased, it is particularly effective and preferred to arrange the reinforcing layer 4 along the tire circumferential direction.

The tire of the present invention can be produced by arranging, at the time of molding a green tire, the above-described composite of the present invention in those regions of the bead portions 11 and the side wall portions 12 that are desired to be reinforced, and subsequently vulcanizing the resultant for 3 to 50 minutes at a vulcanization temperature of 140°C to 190°C in accordance with a conventional method. Specifically, for example, in cases where the reinforcing layer 4 is arranged such that the fiber axis direction of the reinforcing material is aligned with the tire circumferential direction, the composite can be arranged in such a manner to form a spirally wound structure along the tire radial direction.

EXAMPLES

The present invention will now be described in more detail by way of examples thereof.

As material thermoplastic resins, the resins for core and sheath materials shown in Tables 6 and 7 below were used after being dried using a vacuum dryer.

It is noted here that ionomers in which an olefin-based copolymer containing an unsaturated carboxylic acid or anhydride thereof is neutralized with a metal (ion) were prepared by the below-described methods of i) to iii).

1) Production of Ionomer (C3) whose Degree of Neutralization with Metal Salt of Olefin-based Copolymer Containing Monomer of Unsaturated Carboxylic Acid or Anhydride Thereof is 20% or Higher

i) Preparation of SC-1 Compound

As for the preparation of an ionomer in which 40% of the acid groups of an ethylene-methacrylic acid copolymer is neutralized, 100 parts by mass of the resin material (HC-1) shown in Table 6 and 2.8 parts by mass of sodium hydroxide (commercially available, JIS Class 1) were kneaded at 200°C using a melt extruder, and a molten strand extruded from a die arranged at the tip of the melt extruder was fragmented, after which the resulting fragments were dried using a vacuum dryer to obtain polymer pellets.

ii) Preparation of SC-2 Compound

As for the preparation of an ionomer in which 130% of the acid groups of an ethylene-methacrylic acid copolymer is neutralized, 100 parts by mass of the resin material (HC-1) shown in Table 6 and 9.0 parts by mass of sodium hydroxide (commercially available, JIS Class 1) were kneaded at 200°C using a melt extruder, and a molten strand extruded from a die arranged at the tip of the melt extruder was fragmented, after which the resulting fragments were dried using a vacuum dryer, whereby the ionomer was prepared. It is noted here that sodium hydroxide was neutralized using a commercially available JIS Class 1 reagent.

iii) Preparation of SC-3 Compound

As for the preparation of an ionomer in which 100% of the acid groups of a maleic anhydride-modified polybutadiene, 100 parts by mass of the resin material (HC-2) shown in Table 6 and 9.0 parts by mass of zinc oxide were kneaded at 200°C using a melt extruder, and a molten strand extruded from a die arranged at the tip of the melt extruder was fragmented, after which the resulting fragments were dried using a vacuum dryer, whereby the ionomer was prepared.

(Examples 1 to 16 and Comparative Examples 1 to 14)

2) Production of Rubber-reinforcing Cords

Using the respective materials shown in Tables 1 to 7 below as a core component and a sheath component and two cp50-mm uniaxial extruders for the core material and the sheath material along with a core-sheath type composite spinneret having an orifice size of 1.25 mm, the materials were melt-spun at the respective spinning temperatures shown in Tables below and a spinning rate of 100 m/min while adjusting the discharge amount such that a sheath-core ratio of 4:6 was attained in terms of mass ratio. The resultants were subsequently stretched in a 98°C hot water bath at a stretching ratio of 1.7, whereby core-sheath type composite monofilaments having a fineness of 550 dtex were obtained.

3) Production of Rubber-Fiber Composites Coated with Rubber Composition for Side Wall

The thus obtained core-sheath type composite monofilaments were each coated with an unvulcanized rubber having the formulation for side wall shown in Table 10 such that each resultant had a total end count of 60 per a width of 50 mm and a width of 50 mm, whereby rubber-fiber composites were produced.
Further, the surface properties at the time of the spinning were evaluated in accordance with Table 9, and the condition of the disturbance in cord outer appearance is stated in Tables 1 to 5.

4) Production of Test Tires

The rubber-fiber composites produced in the above 3) were each applied as a reinforcing layer to produce test tires of Examples and Comparative Examples at a tire size of 195/65R14. The thus obtained test tires each had a carcass layer composed of a single carcass ply as a skeleton and were equipped with a belt layer formed by two belts arranged on the tire radial-direction outer side of the carcass layer in the crown portion. In addition, between the main body of the carcass ply and the bead fillers of each test tire in a 50 mm-wide region of the side wall portion from the tire radial-direction outer end of the bead core to the tire maximum width position, each of the core-sheath type composite monofilaments obtained above was arranged such that the orientation direction of the reinforcing material was substantially aligned with the tire circumferential direction. As for the vulcanization conditions in the tire production, vulcanization was performed at 180°C for 23 minutes.

5) Cord Fatigue in Test Tires

The test tires of Comparative Examples and Examples were each fitted to the application rim (standard rim) prescribed in the JATMA Year Book 2015 Standard, and the internal pressure was adjusted to 220 kPa in a room of 25 ± 2°C. Each tire was left to stand for 24 hours, and the tire air pressure was subsequently adjusted again, after which a load of 130% of the load prescribed in the JATMA Standard (load: 676 kgf, air pressure: 200 kPa) was applied to the tire and the tire was made to run continuously on a drum of about 3 m in diameter at a speed of 80 km/h over a distance of 40,000 km, whereby thermal degradation and fatigue in traveling were input to each test tire of Comparative Examples and Examples under "conditions close to ordinary urban street traveling but with a higher load".

6) Adhesiveness of Fatigued Cord Embedded in Rubber

From each of the composites taken out of the bead portions of the test tires of Comparative Examples and Examples at the rim-line height, a test sample piece was cut out, and a fiber cord dug out of this sample piece was peeled off from a vulcanized product at a rate of 30 cm/min. For the thus peeled cord, the rubber adhesion state was observed and ranked in accordance with Table 8 below, and the rubber adhesion rate (rubber attachment) was checked, the results of which are shown in Tables 1 to 5 below.

As for the cutting out of a sample piece from the tire of the present invention, as illustrated in FIG. 2, fiber cords were first cut out along the cord axis direction, and a test piece was subsequently prepared by cutting out the rubber such that the rubber remains at a thickness of about 0.1 to 0.7 mm or so from the cord surface, after which a fiber cord dug out therefrom was peeled off from the test piece using a tensile tester, followed by observation of the rubber adhesion state of the thus peeled cord. It is noted here that, in the present invention, the form and the preparation method of the test sample piece are not particularly restricted even when a method different from the above is employed, as long as it is a method in which a single cord is pulled and peeled from the rubber of a tire after running and the rubber adhesion state of the peeled surface can be observed.

7) Evaluation of Cohesiveness (Blocking Property) of Rubber-Reinforcing Core-Sheath Fibers

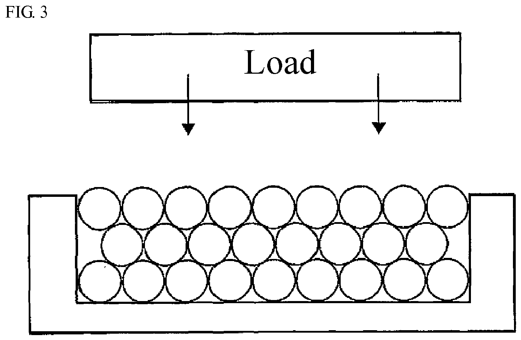

After packing the cords produced in Examples and Comparative Examples as illustrated in FIG. 3, a load was applied thereto at a surface pressure of 50 gf/cm$^2$, and the cords were left to stand for 5 hours. In this process, in order to prevent the packed cords from collapsing under the load, the packed cords were placed in a molded container such as a mold and the load was applied thereto. Thereafter, the cords were dug out, and the resistance in peeling the cords from each other at a rate of 30 cm/min was measured at a room atmosphere temperature of 25 ± 1°C, and the thus obtained value was defined as the cohesive strength between the monofilament cords. The results thereof are shown in Tables 1 to 5.

[Table 1]

| | | Comparative Example 1 | Comparative Example 2 | Example 1 | Example 2 | Example 3 | Example 4 | Comparative Example 3 |
|---|---|---|---|---|---|---|---|---|
| Core portion polymer (C) | Material | CA-1 | CA-1 | CA-1 | CA-1 | CA-1 | CA-1 | CA-1 |
| | Melting point (°C) | 165 | 165 | 165 | 165 | 165 | 165 | 165 |
| Sheath portion material mixture (S) | Sheath resin material 1 | CA-1 | SA-1 | SA-1 | SA-1 | SA-1 | SA-1 | - |
| | (parts by mass) | 100 | 100 | 70 | 25 | 25 | 5 | - |
| | Sheath resin material 2 | - | - | SB-1 | SB-1 | SB-1 | SB-1 | SB-1 |
| | (parts by mass) | - | - | 30 | 75 | 75 | 95 | 100 |
| | Sheath resin material 3 | - | - | - | - | - | - | - |
| | (parts by mass) | - | - | - | - | - | - | - |
| | Vulcanization accelerator | - | - | - | - | SF-1 | - | - |
| | (parts by mass) | - | - | - | - | 2 | - | - |
| | Styrene-based elastomer | - | - | - | - | SE-1 | - | - |
| | (parts by mass) | - | - | - | - | 5 | - | - |
| | Filler | - | - | - | - | SN-1 | - | - |
| | (parts by mass) | - | - | - | - | 75 | - | - |
| Spinneret for spinning | Shape | sheath-core type composite spinneret | sheath-core type composite spinneret | sheath-core type composite spinneret | sheath-core type composite spinneret | sheath-core type composite spinneret | sheath-core type composite spinneret | sheath-core type composite spinneret |
| | Orifice size (mm) | 1.25 | 1.25 | 1.25 | 1.25 | 1.25 | 1.25 | 1.25 |
| Sheath/core composite ratio | | 4/6 | 4/6 | 4/6 | 4/6 | 4/6 | 4/6 | 4/6 |
| Spinning temperature | Core portion (°C) | 210 | 210 | 210 | 210 | 210 | 210 | 210 |
| | Sheath portion (°C) | 200 | 180 | 180 | 180 | 180 | 180 | 180 |
| Tensile rate (m/min) | | 100 | 100 | 100 | 100 | 100 | 100 | 100 |
| Stretching method | | wet heating | wet heating | wet heating | wet heating | wet heating | wet heating | wet heating |
| | | 98°C hot water | 98°C hot water | 98°C hot water | 98°C hot water | 98°C hot water | 98°C hot water | 98°C hot water |
| Fineness (dtex) | | 550 | 550 | 550 | 550 | 550 | 550 | 550 |
| Adhesiveness after tire running (rubber attachment) | | E | D | A | A | A | A | B |
| Cord cohesive strength (N/cord) | | 0.5 | 0.7 | 1.0 | 1.1 | 1.4 | 1.4 | 2.7 |
| Cord surface roughness | | ◎ | ◎ | ◎ | ◎ | ◎ | ○ | × |

[Table 2]

| | | | Comparative Example 4 | Reference Example 5 | Reference Example 6 | Comparative Example 5 | Example 7 | Example 8 | Example 9 |
|---|---|---|---|---|---|---|---|---|---|
| Core portion polymer (C) | | Material | CA-1 | CA-1 | CA-1 | CA-1 | CA-1 | CA-1 | CA-1 |
| | | Melting point (°C) | 165 | 165 | 165 | 165 | 165 | 165 | 165 |
| Sheath portion material mixture (S) | | Sheath resin material 1 | SB-1 | SB-1 | SB-1 | - | SA-2 | SA-2 | SA-2 |
| | | (parts by mass) | 100 | 70 | 30 | - | 75 | 75 | 75 |
| | | Sheath resin material 2 | - | SD-1 | SD-1 | SD-1 | SD-2 | SD-3 | SD-4 |
| | | (parts by mass) | - | 30 | 70 | 100 | 25 | 25 | 25 |
| | | Sheath resin material 3 | - | - | - | - | - | - | - |
| | | (parts by mass) | - | - | - | - | - | - | - |
| | | Vulcanization accelerator | - | - | - | - | - | - | - |
| | | (parts by mass) | - | - | - | - | - | - | - |
| | | Styrene-based elastomer | - | - | - | - | - | - | - |
| | | (parts by mass) | - | - | - | - | - | - | - |
| | | Filler | - | - | - | - | - | - | - |
| | | (parts by mass) | - | - | - | - | - | - | - |
| Spinneret for spinning | | Shape | sheath-core type composite spinneret | sheath-core type composite spinneret | sheath-core type composite spinneret | sheath-core type composite spinneret | sheath-core type composite spinneret | sheath-core type composite spinneret | sheath-core type composite spinneret |
| | | Orifice size (mm) | 1.25 | 1.25 | 1.25 | 1.25 | 1.25 | 1.25 | 1.25 |
| Sheath/core composite ratio | | | 4/6 | 4/6 | 4/6 | 4/6 | 4/6 | 4/6 | 4/6 |
| Spinning temperature | | Core portion (°C) | 210 | 210 | 210 | 210 | 205 | 210 | 210 |
| | | Sheath portion (°C) | 180 | 180 | 180 | 180 | 170 | 180 | 180 |
| Tensile rate (m/min) | | | 100 | 100 | 100 | 100 | 100 | 100 | 100 |
| Stretching method | | | wet heating | wet heating | wet heating | wet heating | wet heating | wet heating | wet heating |
| | | | 98°C hot water | 98°C hot water | 98°C hot water | 98°C hot water | 98°C hot water | 98°C hot water | 98°C hot water |
| Fineness (dtex) | | | 550 | 550 | 550 | 550 | 550 | 550 | 550 |
| Adhesiveness after tire running (rubber attachment) | | | A | A | A | B | A | A | A |
| Cord cohesive strength (N/cord) | | | 2.5 | 1.4 | 0.9 | 0.4 | 1.5 | 0.6 | 0.8 |
| Cord surface roughness | | | Δ | ○ | ◎ | Δ | ○ | ○ | ○ |

[Table 3]

| | | | Comparative Example 6 | Comparative Example 7 | Comparative Example 8 | Example 10 | Example 11 | Example 12 | Comparative Example 9 |
|---|---|---|---|---|---|---|---|---|---|
| Core portion polymer (C) | | Material | CA-2 | CA-2 | CA-2 | CA-2 | CA-2 | CA-2 | CA-2 |
| | | Melting point (°C) | 213 | 213 | 213 | 213 | 213 | 213 | 213 |
| Sheath portion material mixture (S) | | Sheath resin material 1 | CA-2 | SA-2 | SA-2 | SA-2 | SA-2 | SA-2 | SA-2 |
| | | (parts by mass) | 100 | 100 | 95 | 95 | 95 | 75 | 50 |
| | | Sheath resin material 2 | - | - | HC-1 | SC-1 | SC-2 | SC-2 | SC-2 |
| | | (parts by mass) | - | - | 6 | 6 | 6 | 25 | 50 |
| | | Sheath resin material 3 | - | - | - | - | - | - | - |
| | | (parts by mass) | - | - | - | - | - | - | - |
| | | Vulcanization accelerator | - | - | - | - | - | - | - |
| | | (parts by mass) | - | - | - | - | - | - | - |
| | | Styrene-based elastomer | - | - | - | - | - | - | - |
| | | (parts by mass) | - | - | - | - | - | - | - |
| | | Filler | - | - | - | - | - | - | - |
| | | (parts by mass) | - | - | - | - | - | - | - |
| Spinneret for spinning | | Shape | sheath-core type composite spinneret | sheath-core type composite spinneret | sheath-core type composite spinneret | sheath-core type composite spinneret | sheath-core type composite spinneret | sheath-core type composite spinneret | sheath-core type composite spinneret |
| | | Orifice size (mm) | 1.25 | 1.25 | 1.25 | 1.25 | 1.25 | 1.25 | 1.25 |
| Sheath/core composite ratio | | | 4/6 | 4/6 | 4/6 | 4/6 | 4/6 | 4/6 | 4/6 |
| Spinning temperature | | Core portion (°C) | 228 | 228 | 228 | 228 | 228 | 228 | 228 |
| | | Sheath portion (°C) | 180 | 180 | 180 | 180 | 170 | 180 | 180 |
| Tensile rate (m/min) | | | 100 | 100 | 100 | 100 | 100 | 100 | 100 |
| Stretching method | | | wet heating | wet heating | wet heating | wet heating | wet heating | wet heating | wet heating |
| | | | 98°C hot water | 98°C hot water | 98°C hot water | 98°C hot water | 98°C hot water | 98°C hot water | 98°C hot water |
| Fineness (dtex) | | | 550 | 550 | 550 | 550 | 550 | 550 | 550 |
| Adhesiveness after tire running (rubber attachment) | | | E | D | E | B | A | B | D |
| Cord cohesive strength (N/cord) | | | 0.3 | 0.7 | 0.8 | 1.0 | 1.2 | 0.8 | 0.7 |
| Cord surface roughness | | | ◎ | ◎ | ○ | ○ | ○ | ○ | ○ |

[Table 4]

|  |  | Comparative Example 10 | Comparative Example 11 | Comparative Example 12 | Comparative Example 13 | Comparative Example 14 | Example 13 | Example 14 |
|---|---|---|---|---|---|---|---|---|
| Core portion polymer (C) | Material | CA-3 | CA-3 | CA-3 | CA-3 | CA-3 | CA-3 | CA-3 |
| | Melting point (°C) | 220 | 220 | 220 | 220 | 220 | 220 | 220 |
| Sheath portion material mixture (S) | Sheath resin material 1 | CA-3 | HC-3 | SA-2 | SA-2 | SA-2 | SA-2 | SA-2 |
| | (parts by mass) | 100 | 7.4 | 100 | 94 | 94 | 94 | 94 |
| | Sheath resin material 2 | - | SD-1 | - | HC-3 | HC-2 | SC-2 | SC-2 |
| | (parts by mass) | - | 92.6 | - | 6 | 6 | 6 | 6 |
| | Sheath resin material 3 | - | - | - | - | - | - | - |
| | (parts by mass) | - | - | - | - | - | - | - |
| | Vulcanization accelerator | - | - | - | - | - | - | SF-2 |
| | (parts by mass) | - | - | - | - | - | - | 13 |
| | Styrene-based elastomer | - | - | - | - | - | SE-2 | SE-2 |
| | (parts by mass) | - | - | - | - | - | 10 | 10 |
| | Filler | - | - | - | - | - | - | - |
| | (parts by mass) | - | - | - | - | - | - | - |
| Spinneret for spinning | Shape | sheath-core type composite spinneret | sheath-core type composite spinneret | sheath-core type composite spinneret | sheath-core type composite spinneret | sheath-core type composite spinneret | sheath-core type composite spinneret | sheath-core type composite spinneret |
| | Orifice size (mm) | 1.25 | 1.25 | 1.25 | 1.25 | 1.25 | 1.25 | 1.25 |
| Sheath/core composite ratio | | 4/6 | 4/6 | 4/6 | 4/6 | 4/6 | 4/6 | 4/6 |
| Spinning temperature | Core portion (°C) | 240 | 240 | 240 | 240 | 240 | 240 | 240 |
| | Sheath portion (°C) | 190 | 190 | 190 | 190 | 190 | 190 | 190 |
| Tensile rate (m/min) | | 100 | 100 | 100 | 100 | 100 | 100 | 100 |
| Stretching method | | wet heating | wet heating | wet heating | wet heating | wet heating | wet heating | wet heating |
| | | 98°C hot water | 98°C hot water | 98°C hot water | 98°C hot water | 98°C hot water | 98°C hot water | 98°C hot water |
| Fineness (dtex) | | 550 | 550 | 550 | 550 | 550 | 550 | 550 |
| Adhesiveness after tire running (rubber attachment) | | E | D | D | E | E | A | A |
| Cord cohesive strength (N/cord) | | 0.4 | 0.8 | 1.3 | 1.0 | 1.1 | 0.9 | 1.2 |
| Cord surface roughness | | ◎ | ◎ | ○ | ○ | ◎ | ◎ | ○ |

[Table 5]

| | | | Example 15 | Example 16 |
|---|---|---|---|---|
| Core portion polymer (C) | | Material | CA-3 | CA-3 |
| | | Melting point (°C) | 220 | 220 |
| Sheath portion material mixture (S) | | Sheath resin material 1 | SA-2 | SA-2 |
| | | (parts by mass) | 82 | 60 |
| | | Sheath resin material 2 | SC-2 | SC-2 |
| | | (parts by mass) | 18 | 40 |
| | | Sheath resin material 3 | - | - |
| | | (parts by mass) | - | - |
| | | Vulcanization accelerator | - | - |
| | | (parts by mass) | - | - |
| | | Styrene-based elastomer | SE-2 | SE-2 |
| | | (parts by mass) | 10 | 10 |
| | | Filler | - | - |
| | | (parts by mass) | - | - |
| Spinneret for spinning | | Shape | sheath-core type composite spinneret | sheath-core type composite spinneret |
| | | Orifice size (mm) | 1.25 | 1.25 |
| Sheath/core composite ratio | | | 4/6 | 4/6 |
| Spinning temperature | | Core portion (°C) | 240 | 240 |
| | | Sheath portion (°C) | 190 | 190 |
| Tensile rate (m/min) | | | 100 | 100 |
| Stretching method | | | wet heating | wet heating |
| | | | 98°C hot water | 98°C hot water |
| Fineness (dtex) | | | 550 | 550 |
| Adhesiveness after tire running (rubber attachment) | | | B | C |
| Cord cohesive strength (N/cord) | | | 0.9 | 0.6 |
| Surface roughness | | | ○ | ○ |

[Table 6]

| | | | |
|---|---|---|---|
| Sheath material mixture (S) | Sheath resin material (C1) | SA-1 | Propylene-ethylene random copolymer (manufactured by Japan Polypropylene Corporation, trade name "WSX02", MFR at 190°C: 25 g/10 min, melting peak temperature (melting point): 126°C) |
| | | SA-2 | Polypropylene-based thermoplastic elastomer (copolymer of monomers containing structural units derived from propylene, ethylene and butene, manufactured by Mitsui Chemicals, Inc., trade name "NOTIO® 2070", MFR at 190°C: 7 g/10 min, melting peak temperature (melting point): 138°C) |
| | Sheath resin material (C2) | SB-1 | Ethylene-propylene-diene rubber (EPDM) (manufactured by Mitsui Chemicals, Inc., trade name "EPT X-3012P", MFR at 190°C: 5 g/10 min, diene content: 3.6%, melting peak temperature (melting point): 160°C (polypropylene-derived peak: 160°C, polyethylene-derived peak: 129°C) |
| | Sheath resin material (C3) | HC-1 | Ethylene-methacrylic acid copolymer (manufactured by Du Pont-Mitsui Polychemicals Co., Ltd., trade name "NUCREL® N1560", MFR at 190°C: 60 g/10 min, methacrylic acid content: 15% by mass, melting point: 90°C, acid value: 98 mg KOH/g) |
| | | SC-1 | Na-neutralized ionomer of ethylene-methacrylic acid copolymer (mixture obtained by kneading 2.8 parts by mass of sodium hydroxide into 100 parts by mass of HC-1 resin material at 200°C, degree of neutralization = 40%) |
| | | SC-2 | Na-neutralized ionomer of ethylene-methacrylic acid copolymer (mixture obtained by kneading 9.0 parts by mass of sodium hydroxide into 100 parts by mass of HC-1 resin material at 200°C, degree of neutralization = 130%) |
| | | HC-2 | Maleic anhydride-modified polybutadiene (manufactured by Cray Valley, trade name "RICON® 131 MA5", viscosity at 25°C: 15,000 mPa·s, acid value: 29 mg KOH/g, 1,4-cis double bond content: 35% by mass) |
| | | SC-3 | Zinc-neutralized ionomer of maleic anhydride-modified polybutadiene (mixture obtained by kneading 9.0 parts by mass of zinc oxide into 100 parts by mass of HC-2 resin material at 200°C, MFR at 190°C: 6 g/10 min, degree of neutralization = 100%) |
| | | HC-3 | Maleic acid-modified high-density polyethylene (manufactured by Sanyo Chemical Industries, Ltd., trade name "UMEX 2000", melt viscosity at 160°C: 3,500 Pa·s, softening point: 108°C, acid value: 30 mg KOH/g) |
| | Sheath resin material (D) | SD-1 | High-density polyethylene (manufactured by Japan Polypropylene Corporation, trade name "HJ490", MFR at 190°C: 20 g/10 min, melting peak temperature (melting point): 134°C) |
| | | SD-2 | Polybutadiene (manufactured by JSR Corporation, trade name "RB840", MFR at 190°C: 4 g/10 min, 1,2-vinyl bond content = 94%, crystallization degree = 36%, melting peak temperature (melting point): 126°C) |
| | | SD-3 | Propylene polymer (manufactured by Idemitsu Kosan Co., Ltd., trade name "L-MODU S901", MFR at 190°C: 9 g/10 min, melting peak temperature (melting point): 80°C, softening point: 120°C, a polypropylene polymer controlled to have low stereoregularity using a single-site metallocene catalyst in propylene polymerization) |
| | | SD-4 | Polybutene (manufactured by SunAllomer Ltd., trade name "PB0400", MFR at 190°C: 20 g/10 min, melting peak temperature (melting point): 123°C) |
| | Vulcanization accelerator (F) | SF-1 | Zinc salt of 2-mercaptobenzothiazole (manufactured by Ouchi Shinko Chemical Industrial Co., Ltd., trade name "NOCCELER MZ", JIS code: ZnMBT) |
| | | SF-2 | Zinc dibutyldithiocarbamate (manufactured by Ouchi Shinko Chemical Industrial Co., Ltd., trade name "NOCCELER BZ-P", JIS code: ZnBDC) |
| | Compatibilizing agent (SE) | SE-1 | Styrene-butadiene-butylene-styrene block copolymer (SBBS) (manufactured by Asahi Kasei Chemicals Corporation, trade name "TUFTEC® P1083", MFR at 190°C: 3 g/10 min, styrene content: 20%) |
| | | SE-2 | Amine-modified styrene-ethylene-butylene-styrene copolymer (manufactured by JSR Corporation, trade name "DYNARON 8630P", MFR at 230°C: 15 g/10 min, styrene content: 15%) |
| | Carbon black (SN) | SN-1 | Carbon black, ISAF-HS (manufactured by Asahi Carbon Co., Ltd., trade name "ASAHI #78", iodine adsorption amount = 120 g/kg, DBP oil absorption amount (Method A) = 125 ml/100 g, $N_2SA$ nitrogen adsorption specific surface area = 124 $m^2/g$, average particle size = 22 nm) |

[Table 7]

| | | | |
|---|---|---|---|
| Core resin material (C) | Core resin material (CA) | CA-1 | Propylene homopolymer (manufactured by Prime Polymer Co., Ltd., trade name "PRIME POLYPRO® F113G", MFR at 230°C: 4.0 g/10 min, melting peak temperature (melting point): 165°C) |
| | | CA-2 | Polytrimethylene terephthalate (manufactured by Shell Chemicals Japan Ltd., trade name "CORTERRA 9240", melting peak temperature (melting point): 228°C, IV value: 0.92, melting start temperature: 213°C) |
| | | CA-3 | Nylon 6 (manufactured by Ube Industries, Ltd., trade name "UBE NYLON® 1030B", melting temperature: 215 to 220°C, molecular weight: 30,000, specific gravity: 1.14) |

[Table 8]

| Ranks of rubber adhesion rate (rubber attachment) | Area ratio of coating rubber with respect to filament surface area |
|---|---|
| A | higher than 80% but 100% or lower |
| B | higher than 60% but 80% or lower |
| C | higher than 40% but 60% or lower |
| D | higher than 20% but 40% or lower |
| E | 0% to 20% |

[Table 9]

| Ranks of cord surface disturbance at the time of spinning | State of surface roughness with respect to the cord surface area |
|---|---|
| ◎ | Normal cord surface with no abnormality in outer appearance |
| ○ | No major problem in terms of operation and performance |
| △ | Usable with minor adjustment by an operation such as blocking. No conspicuous damage. |
| × | A defect such as peeling is found on the surface. |

[Table 10]

| Formulation of rubber composition for side wall | (parts by mass) |
|---|---|
| NR[1] | 50 |
| BR[2] | 50 |
| Carbon black[3] | 50 |
| Wax[4] | 2 |
| Stearic acid[5] | 2 |
| Zinc white[6] | 3 |
| Age resistor[7] | 3 |
| Vulcanization accelerator[8] | 0.3 |
| Vulcanization accelerator[9] | 0.3 |
| Vulcanization accelerator[10] | 0.8 |

(continued)

| Formulation of rubber composition for side wall | (parts by mass) |
|---|---|
| Sulfur[11] | 2 |

[1] NR: natural rubber (TSR20) (*TSR = Technically Specified Rubber)
[2] BR: polybutadiene rubber, manufactured by Ube Industries, Ltd.), trade name: BR150L
[3] carbon black, manufactured by Tokai Carbon Co., Ltd., trade name: SEAST F
[4] wax: manufactured by Nippon Seiro Co., Ltd., trade name: Microcrystalline Wax "OZOACE 0701"
[5] vulcanization aid (stearic acid), manufactured by New Japan Chemical Co., Ltd., trade name: 50S
[6] vulcanization accelerating aid (zinc oxide), zinc white manufactured by Hakusuitech Co., Ltd.
[7] age resistor: N-(1,3-dimethylbutyl)-N'-p-phenylenediamine, manufactured by Ouchi Shinko Chemical Industrial Co., Ltd., NOCRAC 6C
[8] vulcanization accelerator: diphenylguanidine, manufactured by Ouchi Shinko Chemical Industrial Co., Ltd., NOC-CELER D
[9] vulcanization accelerator: dibenzothiazyl disulfide, manufactured by Sanshin Chemical Industry Co., Ltd., SANCEL-ER DM
[10] vulcanization accelerator: N-cyclohexyl-2-benzothiazolyl sulfenamide, manufactured by Sanshin Chemical Industry Co., Ltd., SANCELER CM
[11] sulfur: manufactured by Tsurumi Chemical Industry Co., Ltd., 5% oil-treated powder sulfur

The followings can be understood from Tables 1 to 5 above.

1) Comparative Example 1 consisting of only the core portion resin exhibited inferior adhesion as compared to Examples and is an example where it is seen that the resin material (B) of the sheath portion is required.

2) In Examples, a post-running adhesion (rubber attachment) level of C or higher, an adhesive strength of 1.56 N/cord or less, a surface roughness of "○" or higher, and no entry of air during vulcanization of the resin material of the sheath portion were all satisfied.

3) Comparative Examples 2 and 3 and Examples 1 to 4 are examples where it is seen that the (C2) content and the (C1) content are preferably 2 to 80 parts by mass and 2 to 98 parts by mass, respectively, and a (C2) content of 100 parts by mass, which exceeds 80 parts by mass, resulted in a higher adhesive strength and a greater surface roughness.

4) Example 3 is an example where the amounts of the compatibilizing agent (E), the vulcanization accelerator (F) and the filler (N) other than the olefin-based copolymer composition (X) were all in preferred ranges.

5) Comparative Examples 4 and 5 and Reference Examples 5 and 6 are examples where the olefin-based polymer was (D1), and show that the (D) content and the (C2) content are preferably in ranges of 2 to 75 parts by mass and 2 to 80 parts by mass, respectively.

6) Example 7 is a case where the homopolymer (D) was a diene-based homopolymer (D2).

7) Example 8 is a case where the homopolymer (D) was a polypropylene polymer controlled to have low stereoregularity using a catalyst and, although this polypropylene polymer has good compatibility with the crystalline propylene (CA-1) of the core portion, since the sheath is softened, the surface roughness is increased.

8) Example 9 is a case where the homopolymer (D) was a poly-1-butene resin and, in this case as well, although the resin has good compatibility with the crystalline propylene (CA-1) of the core portion, since the sheath is a diene and is thus softened, the surface roughness is increased.

9) Comparative Example 6 is an example of a single-component cord of an aliphatic polyester, and it is seen that the absence of the olefin-based copolymer composition (X) in the sheath portion leads to a low adhesiveness.

10) In Comparative Example 7, the core and the sheath were detached at their interface.

11) Comparative Example 8 is an example where an ethylene-unsaturated carboxylic acid copolymer having a degree of neutralization of 0 was used, and the compatibility with the rubber was low and the adhesiveness was lower than that of Comparative Example 7.

12) Examples 10 and 11 are cases where an ethylene-unsaturated carboxylic acid copolymer having a neutralization degree of 40 and an ethylene-unsaturated carboxylic acid copolymer having a neutralization degree of 130 were used in the same amount as in Comparative Example 8, respectively, and the adhesiveness was improved.

13) As the ionomer ratio was increased in the order of Example 11, Example 12 and Comparative Example 9, the polarity of the respective resin compositions increased while the adhesiveness with the non-polar adherend rubber decreased. Further, since the combination of the ethylene-based polymer and the butene-containing copolymer has a low softening point, the surface was disturbed.

14) Comparative Examples 10 to 14 and Example 13 to 16 are examples where the core portion resin was nylon 6.

15) Comparative Example 10 is an example where the core portion and the sheath portion were both nylon 6 and thus not fused together.

16) Comparative Example 11 is an example where the formulation was similar to that of Patent Document 2 and, after the tire running fatigue, the rubber adhesion was low due to the low compatibility between the rubber and the resin.

17) Comparative Examples 13 and 14 are examples where no ionomer was used, and the adhesion with the rubber was reduced after the running.

18) Examples 13 to 16 are examples where the ionomer (C3) according to the present invention was used, and the performance thereof was attained in an amount of 2 to 35 parts by mass.

DESCRIPTION OF REFERENCE NUMERALS

1: bead core
1a: tire radial-direction outer end of bead core 1
2: carcass layer
2A: main body of carcass ply
2B: tire width-direction end of carcass ply
3: belt layer
4: reinforcing layer
5: bead filler
11: bead portion
12: side wall portion
13: tread portion

**Claims**

1. A rubber-fiber composite obtained by coating a reinforcing material composed of a rubber-reinforcing fiber with a rubber, wherein:

   the rubber-reinforcing fiber comprises a core-sheath type composite fiber whose core portion is composed of a high-melting-point resin (A) having a melting point of 150°C or higher, wherein the melting point is measured according to JIS K7121 and sheath portion is composed of a resin material (B) having a melting point lower than that of said high-melting point resin (A),
   wherein said resin material (B) comprises an olefin-based copolymer composition (X) which comprises a propylene-$\alpha$-olefin copolymer (C1), and at least one polymer selected from a propylene-nonconjugated diene copolymer (C2), an ionomer (C3) whose degree of neutralization with a metal salt of an olefin-based copolymer containing a monomer of an unsaturated carboxylic acid or anhydride thereof is 20% or higher, wherein the degree of neutralization is defined as in the description, wherein said ionomer (C3) is an ionomer of an ethylene-ethylenically unsaturated carboxylic acid copolymer, or an ionomer of an unsaturated carboxylic acid polymer or a polyolefin, and wherein the content of said ionomer (C3) is 2 to 40 parts by mass taking the amount of the olefin-based composition (X) as 100 parts by mass, and an olefin-based homopolymer or olefin-based copolymer (D) selected from an $\alpha$-olefin and a polyolefin rubber (excluding (C1) and (C2)).

2. The rubber-fiber composite according to claim 1, wherein said resin material (B) comprises:

   said olefin-based copolymer composition (X); and
   at least one selected from the group consisting of a styrene-based elastomer (E) containing a monomolecular chain in which mainly styrene monomers are arranged in series, a vulcanization accelerator (F) selected from Lewis base compounds (F1) and sulfenamide-based, guanidine-based, thiazole-based, thiuram-based or dithiocarbamic acid-based accelerators (F2), and a filler (N).

3. The rubber-fiber composite according to claim 1, wherein said propylene-$\alpha$-olefin copolymer (C1) is a random copolymer of propylene and ethylene or 1-butene.

4. The rubber-fiber composite according to claim 1, wherein said propylene-nonconjugated diene copolymer (C2) is an ethylene-propylene-diene copolymer.

5. The rubber-fiber composite according to claim 1, which comprises, in 100 parts by mass of said olefin-based copolymer composition (X), said propylene-$\alpha$-olefin copolymer (C1) in an amount of 20 to 98 parts by mass, and at least one of said propylene-nonconjugated diene copolymer (C2) in an amount of 2 to 80 parts by mass, said ionomer (C3) in an amount of 2 to 40 parts by mass, and said olefin-based homopolymer or olefin-based copolymer (D) (excluding (C1) and (C2)) in an amount of 2 to 75 parts by mass.

6. A pneumatic tire comprising a reinforcing layer composed of the rubber-fiber composite according to claim 1.

**Patentansprüche**

1. Kautschuk-Faser-Verbundwerkstoff, der durch Beschichten eines Verstärkungsmaterials, das aus einer kautschukverstärkten Faser besteht, mit einem Kautschuk erhalten wird, wobei:

die kautschukverstärkte Faser eine Verbundwerkstofffaser vom Kern-Manteltyp umfasst, deren Kernteil aus einem Harz (A) mit hohem Schmelzpunkt besteht, das einen Schmelzpunkt von 150°C oder höher aufweist, wobei der Schmelzpunkt JIS K7121 entsprechend gemessen wird, und der Kernteil aus einem Harzmaterial (B) besteht, das einen Schmelzpunkt aufweist, der niedriger als derjenige des Harzes (A) von hohem Schmelzpunkt ist,
wobei das Harzmaterial (B) Folgendes umfasst: eine Copolymerzusammensetzung (X) auf Olefinbasis, die Folgendes umfasst: ein Propylen-$\alpha$-olefincopolymer (C1) und mindestens ein Polymer ausgewählt unter einem nichtkonjugierten Propylen-Diencopolymer (C2), einem Ionomer (C3), dessen Neutralisationsgrad mit einem Metallsalz eines Copolymers auf Olefinbasis, das ein Monomer einer ungesättigten Carbonsäure oder eines Anhydrids davon enthält, 20% oder höher ist, wobei der Neutralisationsgrad wie in der Beschreibung definiert, ist, wobei das Ionomer (C3) ein Ionomer eines ethylen-ethylenisch ungesättigten Carbonsäurecopolymers oder ein Ionomer eines ungesättigten Carbonsäurepolymers oder eines Polyolefins ist und wobei der Gehalt des Ionomers (C3) 2 bis 40 Masseteile beträgt, wobei die Menge der Zusammensetzung (X) auf Olefinbasis als 100 Masseteile genommen wird, und ein Homopolymer auf Olefinbasis oder ein Copolymer (D) auf Olefinbasis ausgewählt unter einem $\alpha$-Olefin und einem Polyolefinkautschuk (ausschließlich (C1) und (C2)).

2. Kautschuk-Faser-Verbundwerkstoff nach Anspruch 1, wobei das Harzmaterial (B) Folgendes umfasst:

die Copolymerzusammensetzung (X) auf Olefinbasis; und
mindestens eines ausgewählt aus der Gruppe bestehend aus einem Elastomer (E) auf Styrolbasis, das eine monomolekulare Kette enthält, in der hauptsächlich Styrolmonomere hintereinander angeordnet sind, einem Vulkanisationsbeschleuniger (F) ausgewählt unter Lewis-Base-Verbindungen (F1) und Beschleunigern (F2) auf Sulfenamidbasis, Guanidinbasis, Thiazolbasis, Thiurambasis oder Dithiocarbaminsäurebasis und einem Füllstoff (N).

3. Kautschuk-Faser-Verbundwerkstoff nach Anspruch 1, wobei das Propylen-$\alpha$-olefincopolymer (C1) ein statistisches Copolymer von Propylen und Ethylen oder 1-Buten ist.

4. Kautschuk-Faser-Verbundwerkstoff nach Anspruch 1, wobei das nichtkonjugierte Propylen-Diencopolymer (C2) ein Ethylen-Propylen-Dien-Copolymer ist.

5. Kautschuk-Faser-Verbundwerkstoff nach Anspruch 1, der, in 100 Masseteilen der Copolymerzusammensetzung (X) auf Olefinbasis, das Propylen-$\alpha$-olefincopolymer (C1) in einer Menge von 20 bis 98 Masseteilen und mindestens eines von dem nichtkonjugierten Propylen-Diencopolymer (C2) in einer Menge von 2 bis 80 Masseteilen, dem Ionomer (C3) in einer Menge von 2 bis 40 Masseteile und dem Homopolymer auf Olefinbasis oder dem Copolymer (D) auf Olefinbasis (ausschließlich (C1) und (C2)) in einer Menge von 2 bis 75 Masseteilen umfasst.

6. Luftreifen umfassend eine Verstärkungsschicht, die aus dem Kautschuk-Faser-Verbundwerkstoff nach Anspruch 1 besteht.

**Revendications**

1. Composite de caoutchouc-fibre obtenu par revêtement d'un matériau de renfort composé d'une fibre de renfort de caoutchouc avec un caoutchouc, où:

   la fibre de renfort de caoutchouc comprend une fibre composite de type cœur-écorce dont la partie cœur est composée d'une résine à point de fusion élevé (A) ayant un point de fusion de 150°C ou plus, le point de fusion étant mesuré selon la norme JIS K7121 et la partie écorce étant composée d'un matériau de résine (B) ayant un point de fusion inférieur à celui de ladite résine à point de fusion élevé (A),
   ledit matériau de résine (B) comprenant une composition copolymère à base d'oléfine (X) qui comprend un copolymère de propylène-α-oléfine (C1), et au moins un polymère sélectionné parmi un copolymère de propylène-diène non conjugué (C2), un ionomère (C3) dont le degré de neutralisation avec un sel métallique d'un copolymère à base d'oléfine contenant un monomère d'un acide carboxylique insaturé ou son anhydride est de 20% ou plus, le degré de neutralisation étant défini comme dans la description, ledit ionomère (C3) étant un ionomère d'un copolymère d'éthylène-acide carboxylique éthyléniquement insaturé, ou un ionomère d'un polymère d'acide carboxylique insaturé ou d'une polyoléfine, et la teneur dudit ionomère (C3) étant de 2 à 40 parties en masse en prenant la quantité de la composition à base d'oléfine (X) comme 100 parties en masse, et un homopolymère à base d'oléfine ou un copolymère à base d'oléfine (D) sélectionné parmi une α-oléfine et un caoutchouc de polyoléfine (excluant (C1) et (C2)).

2. Composite de caoutchouc-fibre selon la revendication 1, ledit matériau de résine (B) comprenant:

   ladite composition copolymère à base d'oléfine (X); et
   au moins l'un sélectionné dans le groupe constitué d'un élastomère à base de styrène (E) contenant une chaîne monomoléculaire dans laquelle principalement les monomères styrènes sont disposés en série, un accélérateur de vulcanisation (F) sélectionné parmi les composés base de Lewis (F1) et des accélérateurs à base de sulfénamide, à base de guanidine, à base de thiazole, à base de thiurame ou à base d'acide dithiocarbamique (F2), et une charge (N).

3. Composite de caoutchouc-fibre selon la revendication 1, ledit copolymère de propylène-α-oléfine (C1) étant un copolymère aléatoire de propylène et d'éthylène ou de 1-butène.

4. Composite de caoutchouc-fibre selon la revendication 1, dans lequel ledit copolymère de propylène-diène non conjugué (C2) est un copolymère d'éthylène-propylène-diène.

5. Composite de caoutchouc-fibre selon la revendication 1, qui comprend, dans 100 parties en masse de ladite composition copolymère à base d'oléfine (X), ledit copolymère de propylène-α-oléfine (C1) en une quantité de 20 à 98 parties en masse, et au moins l'un du copolymère de propylène-diène non conjugué (C2) en une quantité de 2 à 80 parties en masse, ledit ionomère (C3) en une quantité de 2 à 40 parties en masse, et ledit homopolymère à base d'oléfine ou copolymère à base d'oléfine (D) (excluant (C1) et (C2)) en une quantité de 2 à 75 parties en masse.

6. Bandage pneumatique comprenant une couche de renfort composée du composite de caoutchouc-fibre selon la revendication 1.

FIG. 1

FIG. 2

Evaluation of rubber attachment on surface after tensile peeling from rubber

Tensile peeling of dug out cord

0.1 ～ 0.7 mm

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H106406 B
- JP 2003193332 A
- US 4211819 A
- JP H05163618 B
- JP H07238420 B

**Non-patent literature cited in the description**

- Handbook of Fibers. Maruzen Co., Ltd, 25 March 1994, 207
- JATMA Year Book. 2015